# EUROPEAN PATENT APPLICATION

(11) **EP 4 694 378 A1**
(43) Date of publication of application: **11.02.2026**
(21) Application number: 24791885.7
(22) Date of filing: 09.04.2024
(51) Int. Cl.: H04W 52/02

(54) **COMMUNICATION METHOD, TERMINAL DEVICE, AND NETWORK DEVICE**

(30) Priority: 20.04.2023 CN 202310436835; 05.05.2023 CN 202310499290
(71) Applicant: Huawei Technologies Co., Ltd., Shenzhen, Guangdong 518129 (CN)
(72) Inventor: XUE, Yifan, Shenzhen, Guangdong 518129 (CN); TIE, Xiaolei, Shenzhen, Guangdong 518129 (CN)
(74) Representative: Maiwald GmbH
(86) International application number: PCT/CN2024/086869
(87) International publication number: WO 2024/217300

(57) **Abstract**

This application provides a communication method, a terminal device, and a network device, and relates to the field of wireless communication technologies. In this application, when a low power wake up signal LP-WUS is deployed in a part of cells, the terminal device can use the LP-WUS to save energy. The method is applied to a first terminal device, and the first terminal device is in a radio resource control non-connected state. The method includes: The first terminal device receives, in a first cell, a first downlink signal from a first network device, where the first cell corresponds to a first frequency position; and then the first terminal device determines first indication information based on the first downlink signal, where the first indication information indicates a second frequency position, an LP-WUS is configured in a cell corresponding to the second frequency position, and the second frequency position is different from the first frequency position.

## Description

This application claims priorities to Chinese Patent Application No. 202310436835.0, filed with the China National Intellectual Property Administration on April 20, 2023 and entitled "COMMUNICATION METHOD", and to Chinese Patent Application No. 202310499290.8, filed with the China National Intellectual Property Administration on May 5, 2023 and entitled "COMMUNICATION METHOD, TERMINAL DEVICE, AND NETWORK DEVICE", both of which are incorporated herein by reference in their entireties.

### TECHNICAL FIELD

This application relates to the field of wireless communication, and in particular, to a communication method, a terminal device, and a network device.

### BACKGROUND

In a wireless communication system, a terminal device may operate on a wake up radio (wake up radio, WUR) link to monitor a low power wake up signal (low power wake up signal, LP-WUS), and after detecting the LP-WUS, switch to a main link for operating, to reduce power consumption.

However, when an LP-WUS is deployed in a part of cells, a terminal device may fail to use the LP-WUS to save energy.

### SUMMARY

To resolve the foregoing technical problem, this application provides a communication method, a terminal device, and a network device, to cause, when a low power wake up signal (LP-WUS) is deployed in a part of cells, the terminal device to use the LP-WUS to save energy. To achieve the foregoing objective, this application uses the following technical solutions.

According to a first aspect, a communication method is provided. The method may be performed by a first terminal device, or may be performed by a chip of the first terminal device. The first terminal device is in a radio resource control (RRC) non-connected state. The following uses an example in which the method is performed by the first terminal device for description. The method includes: The first terminal device receives, in a first cell, a first downlink signal from a first network device, where the first cell corresponds to a first frequency position; and the first terminal device determines first indication information based on the first downlink signal, where the first indication information indicates a second frequency position, an LP-WUS is configured in a cell corresponding to the second frequency position, and the second frequency position is different from the first frequency position.

In other words, the first terminal device determines the first indication information based on the received first downlink signal. Because the first indication information indicates a frequency position corresponding to a cell in which an LP-WUS is configured, after performing cell search, even if no LP-WUS is configured in the first cell on which the first terminal device camps, the first terminal device may learn of the cell in which the LP-WUS is deployed, to help the first terminal device use the LP-WUS to save energy.

In a possible design, the method further includes: The first terminal device performs cell search based on the second frequency position, and camping on a second cell, where the cell corresponding to the second frequency position includes the second cell; and the first terminal device monitors the LP-WUS in the second cell.

In other words, the first terminal device camps on the second cell based on the second frequency position indicated by the first indication information, to use the LP-WUS sent by the second cell to save energy.

In a possible design, the LP-WUS is not configured in the first cell.

In a possible design, the method further includes: The first terminal device accesses a third cell under a first condition. The third cell corresponds to a third frequency position, and the first condition includes at least one of the following:
Condition 1: The first terminal device corresponds to the third frequency position.
Condition 2: The first terminal device receives second indication information from a second network device, where the second indication information indicates that a frequency position at which the first terminal device initiates access is the third frequency position.

The third cell is the same as or different from a cell on which the first terminal device currently camps.

For example, when the cell on which the first terminal device currently camps is the first cell, the third cell may be the first cell, or may be different from the first cell. Further, when the third cell is the first cell, the second network device in Condition 2 is the same as the first network device.

For another example, when the cell on which the first terminal device currently camps is the second cell, the third cell may be the second cell, or may be different from the second cell. Further, when the third cell is the second cell, the second network device in Condition 2 is the same as the first network device, that is, a downlink signal of the first cell and a downlink signal of the second cell are sent by a same network device. Alternatively, the second network device in Condition 2 is different from the first network device, that is, a downlink signal of the first cell and a downlink signal of the second cell are sent by different network devices.

An LP-WUS may be configured in the third cell, or no LP-WUS is configured in the third cell.

For example, when the third cell is the first cell, if an LP-WUS is configured in the first cell, the third cell is a cell in which an LP-WUS is configured. If no LP-WUS is configured in the first cell, the third cell is a cell in which no LP-WUS is configured. When the third cell is different from the first cell, the third cell may be a cell in which an LP-WUS is configured, or may be a cell in which no LP-WUS is configured.

For another example, when the third cell is the second cell, the third cell is a cell in which an LP-WUS is configured. When the third cell is different from the second cell, the third cell may be a cell in which an LP-WUS is configured, or may be a cell in which no LP-WUS is configured.

In other words, the first terminal device can determine the third frequency position under the first condition, and then determine, based on the third frequency position, to access the third cell. In this way, the third cell is the cell on which the first terminal device currently camps, or the third cell is different from the cell on which the first terminal device currently camps, to help reduce congestion that may be generated when a large quantity of terminal devices camp on a same cell and initiate access in the same cell.

In a possible design, that the first terminal device corresponds to the third frequency position is determined based on the following two items: an identifier of the first terminal device and a sequence of the third frequency position in N frequency positions. The N frequency positions correspond to cells that can be accessed by the first terminal device, and N is a positive integer.

In this way, the first terminal device can also determine a frequency position from the N frequency positions as the third frequency position based on the identifier of the first terminal device.

In a possible design, that the first terminal device corresponds to the third frequency position is determined based on the following three items: an identifier of the first terminal device, a sequence of the third frequency position in N frequency positions, and a first variable. The N frequency positions correspond to cells that can be accessed by the first terminal device, and N is a positive integer. The first variable is related to time information. For example, the first terminal device detects a frame index value, a slot index value, a symbol index value, and the like of an LP-WUS.

In this way, the first terminal device may use different first variables at different moments, and correspondingly, the determined third frequency position also changes.

For example, at a first moment, the third frequency position is the same as a frequency position of the cell on which the first terminal device currently camps. The first terminal device may initiate access without performing cell re-selection. This further reduces an access delay.

For another example, at a second moment, the third frequency position is different from a frequency position of the cell on which the first terminal device currently camps. The first terminal device first performs cell re-selection and then initiates access. In this way, access resource congestion caused because a large quantity of terminal devices initiates access to a same cell is avoided to some extent.

In a possible design, the second indication information is carried in an LP-WUS.

For example, when an LP-WUS is configured in the first cell, and the cell on which the first terminal device currently camps is the first cell, the second indication information is carried in the LP-WUS sent by the first network device in the first cell.

For another example, when an LP-WUS is configured in the second cell, and the cell on which the first terminal device currently camps is the second cell, the second indication information is carried in the LP-WUS sent by the second network device in the second cell.

In a possible design, the method further includes: The first terminal device receives third indication information from a second network device; and the first terminal device accesses a third cell based on the third indication information.

The third indication information indicates a second condition, the second condition is a condition under which a terminal device can access a current cell, and the current cell is a cell in which the third indication information is sent.

When the first terminal device meets the second condition, the third cell is the same as the current cell. When the first terminal device does not meet the second condition, the third cell is different from the current cell.

The second network device may be the same as or different from the first network device.

For example, when the current cell is the first cell, the second network device is the same as the first network device.

For another example, when the current cell is the second cell, the second network device is the same as the first network device, that is, a downlink signal of the first cell and a downlink signal of the second cell are sent by a same network device. Alternatively, the second network device is different from the first network device, that is, a downlink signal of the first cell and a downlink signal of the second cell are sent by different network devices.

In other words, the first terminal device determines, based on the second condition indicated by the third indication information, to access the third cell. When the first terminal device meets the second condition, the third cell is a current cell on which the first terminal device camps. When the first terminal device does not meet the second condition, the third cell is different from the current cell on which the first terminal device camps. This helps reduce congestion that may be generated when a large quantity of terminal devices camp on a same cell and initiate access in the same cell.

In a possible design, the method further includes: The first terminal device receives fourth indication information from a second network device, where the fourth indication information indicates N frequency positions, the N frequency positions correspond to cells that can be accessed by the first terminal device, and N is a positive integer.

The second network device may be the same as or different from the first network device.

For example, when the cell on which the first terminal device currently camps is the first cell, the second network device is the same as the first network device.

For another example, when the cell on which the first terminal device currently camps is the second cell, the second network device is the same as the first network device, that is, a downlink signal of the first cell and a downlink signal of the second cell are sent by a same network device. Alternatively, the second network device is different from the first network device, that is, a downlink signal of the first cell and a downlink signal of the second cell are sent by different network devices.

In other words, a large quantity of terminal devices may camp on and initiate access in a cell in which an LP-WUS is configured. Therefore, the second network device sends the fourth indication information to the first terminal device, to indicate the N frequency positions to the first terminal device, so that the first terminal device can determine a frequency position from the N frequency positions, to initiate access. A frequency position at which the first terminal device initiates access may be different from a frequency position at which another terminal device in a same cell initiates access, or a probability that the frequency positions are different increases. In this case, a probability of an access conflict of the first terminal device is reduced, to help the first terminal device successfully perform access and reduce an access delay.

In a possible design, the fourth indication information includes N absolute radio frequency channel numbers (ARFCNs), and the N ARFCNs are in one-to-one correspondence with the N frequency positions.

In a possible design, the first indication information includes an ARFCN, and the ARFCN corresponds to the second frequency position.

In a possible design, the first indication information further indicates a fourth frequency position, an LP-WUS is configured in a cell corresponding to the fourth frequency position, and the fourth frequency position is different from the first frequency position and the second frequency position. In other words, the first indication information indicates a frequency position at which an LP-WUS is configured, and the first indication information may indicate two or more frequency positions. This solution helps further reduce a possibility that congestion is caused by a plurality of terminal devices accessing a same cell.

According to a second aspect, a communication method is provided. The method may be performed by a first terminal device, or may be performed by a chip of the first terminal device. The first terminal device is in an RRC non-connected state. The following uses an example in which the method is performed by the first terminal device for description. The method includes: The first terminal device receives a second downlink signal from a second network device; and the first terminal device determines fourth indication information based on the second downlink signal, where the fourth indication information indicates N frequency positions, the N frequency positions correspond to cells that can be accessed by the first terminal device, and N is a positive integer.

In other words, a large quantity of terminal devices may camp on and initiate access in a cell in which an LP-WUS is configured. Therefore, the second network device sends the fourth indication information to the first terminal device, to indicate the N frequency positions to the first terminal device, so that the first terminal device can determine a frequency position from the N frequency positions, to initiate access. A frequency position at which the first terminal device initiates access may be different from a frequency position at which another terminal device in a same cell initiates access, or a probability that the frequency positions are different increases. In this case, a probability of an access conflict of the first terminal device is reduced, to help the first terminal device successfully perform access and reduce an access delay.

In a possible design, the method further includes: The first terminal device accesses a third cell under a first condition. The third cell corresponds to a third frequency position, the third frequency position is one of the N frequency positions, and the first condition includes at least one of the following:
Condition 1: The first terminal device corresponds to the third frequency position.
Condition 2: The first terminal device receives second indication information from the second network device, where the second indication information indicates that a frequency position at which the first terminal device initiates access is the third frequency position.

In other words, the first terminal device can determine the third frequency position under the first condition, and then determine, based on the third frequency position, to access the third cell. In this way, the third cell is the cell on which the first terminal device currently camps, or the third cell is different from the cell on which the first terminal device currently camps, to help reduce congestion that may be generated when a large quantity of terminal devices camp on a same cell and initiate access in the same cell.

In a possible design, that the first terminal device corresponds to the third frequency position is determined based on the following two items: an identifier of the first terminal device and a sequence of the third frequency position in the N frequency positions.

In this way, the first terminal device can also determine a frequency position from the N frequency positions as the third frequency position based on the identifier of the first terminal device.

In a possible design, that the first terminal device corresponds to the third frequency position is determined based on the following three items: an identifier of the first terminal device, a sequence of the third frequency position in the N frequency positions, and a first variable. The first variable is related to time information. For example, the first terminal device detects a frame index value, a slot index value, a symbol index value, and the like of an LP-WUS.

In this way, the first terminal device may use different first variables at different moments, and correspondingly, the determined third frequency position also changes.

For example, at a first moment, the third frequency position is the same as a frequency position of the cell on which the first terminal device currently camps. The first terminal device may initiate access without performing cell re-selection. This further reduces an access delay.

For another example, at a second moment, the third frequency position is different from a frequency position of the cell on which the first terminal device currently camps. The first terminal device first performs cell re-selection and then initiates access. In this way, access resource congestion caused because a large quantity of terminal devices initiates access to a same cell is avoided to some extent.

In a possible design, the second indication information is carried in an LP-WUS.

In a possible design, the method further includes: The first terminal device receives third indication information from the second network device; and the first terminal device accesses a third cell based on the third indication information.

The third indication information indicates a second condition, the second condition is a condition under which a terminal device can access a current cell, and the current cell is a cell in which the third indication information is sent.

When the first terminal device meets the second condition, the third cell is the same as the current cell. When the first terminal device does not meet the second condition, the third cell is different from the current cell.

In other words, the first terminal device determines, based on the second condition indicated by the third indication information, to access the third cell. When the first terminal device meets the second condition, the third cell is a current cell on which the first terminal device camps. When the first terminal device does not meet the second condition, the third cell is different from the current cell on which the first terminal device camps. This helps reduce congestion that may be generated when a large quantity of terminal devices camp on a same cell and initiate access in the same cell.

In a possible design, the fourth indication information includes N ARFCNs, and the N ARFCNs are in one-to-one correspondence with the N frequency positions.

According to a third aspect, a communication method is provided. The method may be performed by a first terminal device, or may be performed by a chip of the first terminal device. The first terminal device is in an RRC connected state. The following uses an example in which the method is performed by the first terminal device for description. The method includes: The first terminal device determines a first frequency position; and the first terminal device monitors, at the first frequency position, an LP-WUS from a first network device. The LP-WUS indicates to monitor, on a first carrier, a physical downlink control channel (PDCCH) from a second network device, the first frequency position is out of a frequency range of the first carrier, and the first network device is the same as or different from the second network device.

For example, that the second network device is the same as the first network device may be understood as that the LP-WUS and the PDCCH are sent by a same network device.

For another example, that the second network device is different from the first network device may be understood as that the LP-WUS and the PDCCH are sent by different network devices.

In other words, when being in the RRC connected state, the first terminal device monitors, at the first frequency position, the LP-WUS from the first network device. The LP-WUS indicates to monitor, on the first carrier, the PDCCH from the second network device, and the first frequency position is out of the frequency range of the first carrier. Therefore, the first terminal device may perform PDCCH monitoring on a corresponding carrier based on the LP-WUS when being in the RRC connected state, to use the LP-WUS to save energy.

In a possible design, the first frequency position is in a frequency range of a second carrier, and the second carrier is different from the first carrier. This may be replaced with the following description: The first terminal device monitors, on the second carrier, the LP-WUS from the first network device. The LP-WUS indicates to monitor, on the first carrier, the PDCCH from the second network device, to implement cross-carrier indication and avoid configuring the LP-WUS on each carrier, so as to reduce resource overheads of the LP-WUS.

In a possible design, the LP-WUS further indicates to monitor, on the second carrier, a PDCCH from the first network device.

In other words, the LP-WUS indicates to monitor, on the first carrier, the PDCCH from the second network device, and also indicates to monitor, on the second carrier, the PDCCH from the first network device, to avoid configuring the LP-WUS on each carrier, so as to further reduce resource overheads of the LP-WUS.

In a possible design, the LP-WUS includes an identifier of the first terminal device. The LP-WUS indicates the first terminal device to perform PDCCH monitoring on the first carrier and the second carrier.

In other words, when the LP-WUS carries the identifier of the first terminal device, the LP-WUS indicates to monitor, on the first carrier, the PDCCH from the second network device, and also indicates to monitor, on the second carrier, the PDCCH from the first network device, so that the first network device can control the first terminal device to perform PDCCH monitoring on the first carrier and the second carrier, thereby reducing signaling overheads.

In a possible design, the LP-WUS includes fifth indication information and sixth indication information. The fifth indication information indicates the first terminal device to perform PDCCH monitoring on the first carrier, and the sixth indication information indicates the first terminal device to perform PDCCH monitoring on the second carrier.

In other words, when the LP-WUS carries the fifth indication information and the sixth indication information, the LP-WUS may indicate, by using the fifth indication information, to perform PDCCH monitoring on the first carrier, and may indicate, by using the sixth indication information, to perform PDCCH monitoring on the second carrier, so that the first network device can flexibly and efficiently control the first terminal device to perform PDCCH monitoring on a specific carrier (or some carriers).

According to a fourth aspect, a communication method is provided. The method may be performed by a first network device, or may be performed by a chip of the first network device. The following uses an example in which the method is performed by the first network device for description. The method includes: The first network device determines first indication information, where the first indication information indicates a second frequency position, and an LP-WUS is configured in a cell corresponding to the second frequency position; and the first network device sends, in a first cell, a first downlink signal to a first terminal device, where the first cell corresponds to a first frequency position, the first frequency position is different from the second frequency position, the first terminal device is in an RRC non-connected state, and the first downlink signal includes the first indication information.

In a possible design, the method further includes: The first network device sends, in a second cell, the LP-WUS to the first terminal device, where the cell corresponding to the second frequency position includes the second cell.

In a possible design, the LP-WUS is not configured in the first cell.

In a possible design, the method further includes: The first network device determines, under a first condition, that the first terminal device accesses a third cell. The third cell corresponds to a third frequency position, and the first condition includes at least one of the following:
Condition 1: The first terminal device corresponds to the third frequency position.
Condition 2: The first network device sends second indication information to the first terminal device, where the second indication information indicates that a frequency position at which the first terminal device initiates access is the third frequency position.

In a possible design, that the first terminal device corresponds to the third frequency position is determined based on the following two items: an identifier of the first terminal device and a sequence of the third frequency position in N frequency positions. The N frequency positions correspond to cells that can be accessed by the first terminal device, and N is a positive integer.

In a possible design, that the first terminal device corresponds to the third frequency position is determined based on the following three items: an identifier of the first terminal device, a sequence of the third frequency position in N frequency positions, and a first variable. The N frequency positions correspond to cells that can be accessed by the first terminal device, and N is a positive integer.

In a possible design, the second indication information is carried in an LP-WUS.

In a possible design, the method further includes: The first network device sends third indication information to the first terminal device, where the third indication information indicates a second condition, the second condition is a condition under which a terminal device can access a current cell, and the current cell is a cell in which the third indication information is sent.

In a possible design, the method further includes: The first network device sends fourth indication information to the first terminal device, where the fourth indication information indicates N frequency positions, the N frequency positions correspond to cells that can be accessed by the first terminal device, and N is a positive integer.

In a possible design, the fourth indication information includes N ARFCNs, and the N ARFCNs are in one-to-one correspondence with the N frequency positions.

In a possible design, the first indication information includes an ARFCN, and the ARFCN corresponds to the second frequency position.

In a possible design, the first indication information further indicates a fourth frequency position, an LP-WUS is configured in a cell corresponding to the fourth frequency position, and the fourth frequency position is different from the first frequency position and the second frequency position.

According to a fifth aspect, a communication method is provided. The method may be performed by a second network device, or may be performed by a chip of the second network device. The following uses an example in which the method is performed by the second network device for description. The method includes: The second network device determines fourth indication information, where the fourth indication information indicates N frequency positions, the N frequency positions correspond to cells that can be accessed by a first terminal device, and N is a positive integer; and the second network device sends a second downlink signal to the first terminal device, where the second downlink signal includes the fourth indication information, and the first terminal device is in an RRC non-connected state.

In a possible design, the method further includes: The second network device determines, under a first condition, that the first terminal device accesses a third cell. The third cell corresponds to a third frequency position, the third frequency position is one of the N frequency positions, and the first condition includes at least one of the following:
Condition 1: The first terminal device corresponds to the third frequency position.
Condition 2: The second network device sends second indication information to the first terminal device, where the second indication information indicates that a frequency position at which the first terminal device initiates access is the third frequency position.

In a possible design, that the first terminal device corresponds to the third frequency position is determined based on the following two items: an identifier of the first terminal device and a sequence of the third frequency position in the N frequency positions.

In a possible design, that the first terminal device corresponds to the third frequency position is determined based on the following three items: an identifier of the first terminal device, a sequence of the third frequency position in the N frequency positions, and a first variable.

In a possible design, the second indication information is carried in an LP-WUS.

In a possible design, the method further includes: The second network device sends third indication information to the first terminal device, where the third indication information indicates a second condition, the second condition is a condition under which a terminal device can access a current cell, and the current cell is a cell in which the third indication information is sent.

In a possible design, the fourth indication information includes N ARFCNs, and the N ARFCNs are in one-to-one correspondence with the N frequency positions.

According to a sixth aspect, a communication method is provided. The method may be performed by a first network device, or may be performed by a chip of the first network device. The following uses an example in which the method is performed by the first network device for description. The method includes: The first network device determines a first frequency position; and the first network device sends, at the first frequency position, an LP-WUS to a first terminal device. The first terminal device is in an RRC connected state, the LP-WUS indicates to monitor, on a first carrier, a PDCCH from a second network device, the first frequency position is out of a frequency range of the first carrier, and the first network device is the same as or different from the second network device.

In a possible design, the first frequency position is in a frequency range of a second carrier, and the second carrier is different from the first carrier.

In a possible design, the LP-WUS further indicates to monitor, on the second carrier, a PDCCH from the first network device.

In a possible design, the LP-WUS includes an identifier of the first terminal device. The LP-WUS indicates the first terminal device to perform PDCCH monitoring on the first carrier and the second carrier.

In a possible design, the LP-WUS includes fifth indication information and sixth indication information. The fifth indication information indicates the first terminal device to perform PDCCH monitoring on the first carrier, and the sixth indication information indicates the first terminal device to perform PDCCH monitoring on the second carrier.

According to a seventh aspect, a terminal device is provided. The terminal device includes a processor and a memory. The processor is coupled to the memory, the memory stores program instructions, and when the program instructions stored in the memory are executed by the processor, the terminal device is caused to perform the method according to any one of the first aspect or the possible designs of the first aspect, or the terminal device is caused to perform the method according to any one of the second aspect or the possible designs of the second aspect, or the terminal device is caused to perform the method according to any one of the third aspect or the possible designs of the third aspect.

According to an eighth aspect, a network device is provided. The network device includes a processor and a memory, the processor is coupled to the memory, the memory stores program instructions, and when the program instructions stored in the memory are executed by the processor, the network device is caused to perform the method according to any one of the fourth aspect or the possible designs of the fourth aspect, or the network device is caused to perform the method according to any one of the fifth aspect or the possible designs of the fifth aspect, or the network device is caused to perform the method according to any one of the sixth aspect or the possible designs of the sixth aspect.

According to a ninth aspect, a chip is provided. The chip includes a processor and a memory coupled to the processor, the memory stores a computer program, the chip is located in a terminal device, and when the processor executes the computer program, the terminal device is caused to perform the method according to any one of the first aspect or the possible designs of the first aspect, or the terminal device is caused to perform the method according to any one of the second aspect or the possible designs of the second aspect, or the terminal device is caused to perform the method according to any one of the third aspect or the possible designs of the third aspect.

According to a tenth aspect, a chip is provided. The chip includes a processor and a memory coupled to the processor, the memory stores a computer program, the chip is located in a network device, and when the processor executes the computer program, the network device is caused to perform the method according to any one of the fourth aspect or the possible designs of the fourth aspect, or the network device is caused to perform the method according to any one of the fifth aspect or the possible designs of the fifth aspect, or the network device is caused to perform the method according to any one of the sixth aspect or the possible designs of the sixth aspect.

According to an eleventh aspect, a computer-readable storage medium is provided. The computer-readable storage medium stores a computer program or instructions. When the computer program or the instructions are executed on a terminal device, the terminal device is caused to perform the method according to any one of the first aspect or the possible designs of the first aspect, or the terminal device is caused to perform the method according to any one of the second aspect or the possible designs of the second aspect, or the terminal device is caused to perform the method according to any one of the third aspect or the possible designs of the third aspect.

According to a twelfth aspect, a computer-readable storage medium is provided, and stores a computer program or instructions. When the computer program or the instructions are executed on a network device, the network device is caused to perform the method according to any one of the fourth aspect or the possible designs of the fourth aspect, or the network device is caused to perform the method according to any one of the fifth aspect or the possible designs of the fifth aspect, or the network device is caused to perform the method according to any one of the sixth aspect or the possible designs of the sixth aspect.

According to a thirteenth aspect, a computer program product including instructions is provided. When the computer program product runs on a computer, the computer is caused to perform the method according to any one of the foregoing aspects.

According to a fourteenth aspect, a circuit system is provided. The circuit system includes a processing circuit, and the processing circuit is configured to perform the method according to any one of the foregoing aspects.

According to a fifteenth aspect, a communication system is provided, including a terminal device and a network device. The terminal device is configured to perform the method according to any one of the first aspect or the possible designs of the first aspect, and the network device is configured to perform the method according to any one of the fourth aspect or the possible designs of the fourth aspect. Alternatively, the terminal device is configured to perform the method according to any one of the second aspect or the possible designs of the second aspect, and the network device is configured to perform the method according to any one of the fifth aspect or the possible designs of the fifth aspect. Alternatively, the terminal device is configured to perform the method according to any one of the third aspect or the possible designs of the third aspect, and the network device is configured to perform the method according to any one of the sixth aspect or the possible designs of the sixth aspect.

For technical effects brought by any design of the fourth aspect to the fifteenth aspect, refer to the beneficial effects in the corresponding method provided above. Details are not described herein again.

### BRIEF DESCRIPTION OF DRAWINGS

FIG. 1 is a diagram of an architecture of a communication system according to an embodiment of this application;
FIG. 2 is a schematic of a principle of an operating circuit according to an embodiment of this application;
FIG. 3 is a diagram of a modulation scheme according to an embodiment of this application;
FIG. 4 is a diagram of another modulation scheme according to an embodiment of this application;
FIG. 5 is a schematic flowchart of a communication method according to an embodiment of this application;
FIG. 6 is a diagram of LP-WUS deployment according to an embodiment of this application;
FIG. 7 is a schematic flowchart of another communication method according to an embodiment of this application;
FIG. 8 is a schematic flowchart of still another communication method according to an embodiment of this application;
FIG. 9 is a schematic flowchart of still another communication method according to an embodiment of this application;
FIG. 10 is another diagram LP-WUS deployment according to an embodiment of this application; and
FIG. 11 is a diagram of a structure of a communication apparatus according to an embodiment of this application.

### DESCRIPTION OF EMBODIMENTS

The following describes technical solutions of this application with reference to accompanying drawings.

The technical solutions in embodiments of this application may be applied to various communication systems, for example, a universal mobile telecommunications system (universal mobile telecommunications system, UMTS), a wireless local area network (wireless local area network, WLAN), a wireless fidelity (wireless fidelity, Wi-Fi) system, a wired network, a vehicle to everything (vehicle to everything, V2X) communication system, a device-to-device (device-to-device, D2D) communication system, an internet of vehicles communication system, a 4^{th} generation (4^{th} generation, 4G) mobile communication system, for example, a long term evolution (long term evolution, LTE) system or a worldwide interoperability for microwave access (worldwide interoperability for microwave access, WiMAX) communication system, a 5^{th} generation (5^{th} generation, 5G) mobile communication system, for example, a new radio (new radio, NR) system, a 6^{th} generation (6^{th} generation, 6G) mobile communication system, and a communication system in an indoor commercial scenario. This is not specifically limited in embodiments of this application. Indoor commercial scenarios include scenarios such as screen projection from a terminal device (for example, a mobile phone) to a screen and a virtual reality (virtual reality, VR) game. In addition, the terms "system" and "network" may be interchangeable with each other.

All aspects, embodiments, or features are presented in this application by describing a system that may include a plurality of devices, components, modules, and the like. It should be appreciated and understood that each system may include another device, component, module, and the like, and/or may not include all devices, components, modules, and the like discussed with reference to the accompanying drawings. In addition, a combination of these solutions may be used.

In addition, in embodiments of this application, the terms such as "example" and "for example" are used to represent giving an example, an illustration, or descriptions. Any embodiment or design scheme described as an "example" in this application should not be explained as being more preferred or having more advantages than another embodiment or design scheme. Exactly, the term "example" is for presenting a concept in a specific manner.

In embodiments of this application, "of (of)", "relevant (corresponding, relevant)", and "corresponding (corresponding)" may be interchangeably used sometimes. It should be noted that meanings expressed by the terms are consistent when differences are not emphasized.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

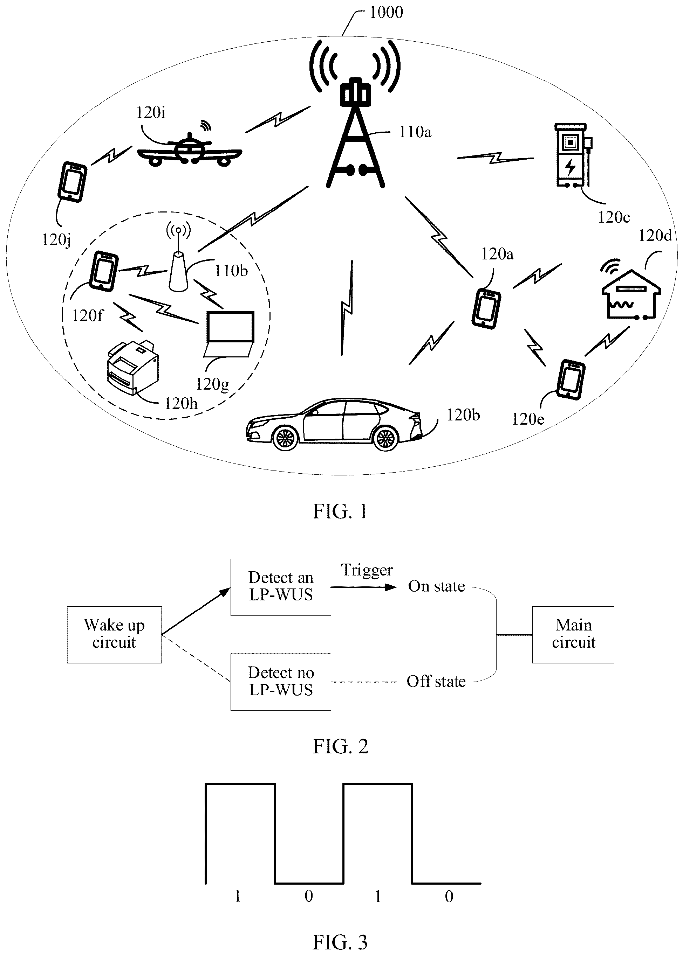

FIG. 1 is a diagram of an architecture of a communication system 1000 to which an embodiment of this application is applied. As shown in FIG. 1, the communication system 1000 includes at least one network device (for example, 110a and 110b in FIG. 1) and at least one terminal device (for example, 120a to 120j in FIG. 1). The terminal device may communicate with the network device in a wireless manner. Optionally, different network devices may communicate with each other. Optionally, different terminal devices may communicate with each other.

It should be noted that FIG. 1 is merely a diagram. Although not shown, another network device may further be included in the communication system 1000. For example, the communication system 1000 may further include one or more of a core network (core network, CN) device, a wireless relay device, and a wireless backhaul device. This is not specifically limited herein. The network device may be connected to the core network device in a wireless or wired manner. The core network device and the network device may be different independent physical devices, a function of the core network device and a logical function of the network device may be integrated into a same physical device, or a part of functions of the core network device and a part of functions of the network device may be integrated into one physical device. This is not specifically limited in embodiments of this application.

Optionally, the network device may be a base station (base station), an evolved NodeB (evolved NodeB, eNodeB), a transmission reception point (transmission reception point, TRP), a next generation NodeB (next generation NodeB, gNB) in a 5^{th} generation (5^{th} generation, 5G) mobile communication system, a next generation NodeB in a 6^{th} generation (6^{th} generation, 6G) mobile communication system, a base station in a future mobile communication system, an access node in a wireless fidelity (wireless fidelity, Wi-Fi) system, or the like; or may be a module or a unit that completes a part of functions of the base station. For example, the network device may be a central unit (central unit, CU), or may be a distributed unit (distributed unit, DU). The CU herein completes functions of a radio resource control (radio resource control, RRC) protocol and a packet data convergence protocol (packet data convergence protocol, PDCP) of the base station, and may further complete a function of a service data adaptation protocol (service data adaptation protocol, SDAP). The DU completes functions of a radio link control (radio link control, RLC) layer and a medium access control (medium access control, MAC) layer of the base station, and may further complete functions of a part of physical (physical, PHY) layers or all physical layers. For specific descriptions of the foregoing protocol layers, refer to related technical specifications of a 3^{rd} generation partnership project (3^{rd} generation partnership project, 3GPP). The network device may be a macro base station (for example, 110a in FIG. 1), may be a micro base station or an indoor base station (for example, 110b in FIG. 1), or may be a relay node, a donor node, or the like. A specific technology and a specific device form that are used by the network device are not limited in embodiments of this application. For ease of description, the following uses the network device as an example for description.

Optionally, a terminal device accesses a core network by using the network device. The terminal device includes a device that provides a voice and/or data connectivity for a user. Specifically, the terminal device includes a device that provides a voice for the user, or includes a device that provides data connectivity for the user, or includes a device that provides a voice and data connectivity for the user. For example, the terminal device may include a handheld device having a wireless connection function or a processing device connected to a wireless modem. The terminal device may communicate with the core network through a radio access network, exchange speech or data with the RAN, or exchange speech and data with the RAN. The terminal device may include user equipment (user equipment, UE), a wireless terminal device, a mobile terminal device, a device-to-device (device-to-device, D2D) communication terminal device, a vehicle to everything (vehicle to everything, V2X) terminal device, a machine-to-machine/machine-type communication (machine-to-machine/machine-type communication, M2M/MTC) terminal device, an internet of things (internet of things, IoT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal device may include a mobile phone (or referred to as a "cellular" phone), a computer having a mobile terminal device, or a portable, pocket-sized, handheld, computer-built-in mobile apparatus. For example, the terminal device may be a device, such as a personal communication service (personal communication service, PCS) phone, a cordless telephone, a session initiation protocol (session initiation protocol, SIP) phone, a wireless local loop (wireless local loop, WLL) station, or a personal digital assistant (personal digital assistant, PDA). The terminal device may alternatively include a limited device, for example, a device with low power consumption, a device with a limited storage capability, or a device with a limited computing capability. For example, the terminal device includes an information sensing device such as a barcode, radio frequency identification (radio frequency identification, RFID), a sensor, a global positioning system (global positioning system, GPS), or a laser scanner.

If the various terminal devices described above are located in a vehicle (for example, placed in the vehicle or installed in the vehicle), the terminal devices may be all considered as vehicle-mounted terminal devices. For example, the vehicle-mounted terminal devices are also referred to as on-board units (on-board units, OBUs).

In embodiments of this application, the terminal device may further include a relay (relay). Alternatively, it is understood as that any device that can perform data communication with a base station may be considered as a terminal device.

In this embodiment of this application, the apparatus configured to implement a function of the terminal device may be a terminal device, or may be an apparatus that can support the terminal device in implementing the function, for example, a chip system. The apparatus may be installed in the terminal device. In this embodiment of this application, the chip system may include a chip, or may include a chip and another discrete component. In the technical solutions provided in embodiments of this application, an example in which the apparatus configured to implement the function of the terminal is a terminal device is used for description.

It should be understood that the network device and the terminal device may be at fixed positions, or may be movable. The network device and the terminal device may be deployed on the land, including an indoor device, an outdoor device, a handheld device, or a vehicle-mounted device; may be deployed on the water surface; or may be deployed on a plane, a balloon, and a satellite in the air. Application scenarios of the network device and the terminal device are not limited in embodiments of this application.

Roles of the network device and the terminal device may be relative. For example, a helicopter or an uncrewed aerial vehicle 120i in FIG. 1 may be configured as a mobile base station. For the terminal device 120j that accesses the radio access network through 120i, the terminal device 120i is a network device. However, for the network device 110a, 120i is a terminal device. In other words, 110a and 120i communicate with each other by using a radio air interface protocol. Certainly, 110a and 120i may alternatively communicate with each other by using an interface protocol between base stations. In this case, for 110a, 120i is also a network device. Therefore, both the network device and the terminal device may be collectively referred to as communication apparatuses. 110a and 110b in FIG. 1 may be referred to as communication apparatuses having a function of a network device, and 120a to 120j in FIG. 1 may be referred to as communication apparatuses having a function of a terminal device.

Communication may be performed between the network device and the terminal device, between the network devices, and between the terminal devices by using a licensed spectrum, may be performed by using an unlicensed spectrum, or may be performed by using both a licensed spectrum and an unlicensed spectrum. Communication may be performed by using a spectrum below 6 gigahertz (gigahertz, GHz), may be performed by using a spectrum above 6 GHz, or may be performed by using both a spectrum below 6 GHz and a spectrum above 6 GHz. A spectrum resource used for wireless communication is not limited in embodiments of this application.

In embodiments of this application, the function of the network device may alternatively be performed by a module (for example, a chip) in the network device, or may be performed by a control subsystem including the function of the network device. The control subsystem including the function of the network device may be a control center in the foregoing application scenarios such as smart grid, industrial control, intelligent transportation, and smart city. The function of the terminal device may alternatively be performed by a module (for example, a chip or a modem) in the terminal device, or may be performed by an apparatus including the function of the terminal device.

In embodiments of this application, the network device sends a downlink signal or downlink information to the terminal device, where the downlink information is carried on a downlink channel. The terminal device sends an uplink signal or uplink information to the network device, where the uplink information is carried on an uplink channel. To communicate with the network device, the terminal device needs to establish a wireless connection to a cell controlled by the network device. A cell that establishes a wireless connection to the terminal device is referred to as a serving cell of the terminal device. When the terminal device communicates with the serving cell, the terminal device is further interfered by a signal from a neighboring cell.

It should be noted that the solutions in embodiments of this application may alternatively be applied to another communication system, and a corresponding name may be replaced with a name of a corresponding function in the another communication system.

For ease of understanding embodiments of this application, the following first briefly describes terms in embodiments of this application. It should be understood that these descriptions are merely for ease of understanding of embodiments of this application, and shall not constitute any limitation on this application.

### 1. Radio resource control (radio resource control, RRC) state

A terminal device has three RRC states: an RRC connected (connected) state, an RRC idle (idle) state, and an RRC inactive (inactive) state.

The RRC connected state means that the terminal device establishes an RRC connection to a network device, and may perform data transmission over the RRC connection. In addition, the RRC connected state may also be referred to as a connected state for short. In embodiments of this application, the "connected state" and the "RRC connected state" are a same concept, and the two concepts are interchangeable with each other.

The RRC idle state means that the terminal device does not establish an RRC connection to the network device, and the network device (for example, a base station) does not store a context of the terminal device. If the terminal device needs to enter the RRC connected state from the RRC idle state, the terminal device needs to initiate an RRC connection establishment process. In addition, the RRC idle state may also be referred to as an idle state for short. In embodiments of this application, the "idle state" and the "RRC idle state" are a same concept, and the two concepts are interchangeable with each other.

The RRC inactive state means that the terminal device previously enters the RRC connected state at an anchor base station, and then the anchor base station releases the RRC connection, but the anchor base station stores the context of the terminal device. If the terminal device needs to re-enter the RRC connected state from the RRC inactive state, the terminal device needs to initiate an RRC connection resume process (or described as an RRC connection reestablishment process) at a base station on which the terminal device currently camps.

It should be understood that, because the terminal device may be in a moving state, the base station on which the terminal device currently camps and the anchor base station of the terminal device may be a same base station, or may be different base stations. In comparison with the RRC establishment process, the RRC resume process has a shorter delay and lower signaling overheads. However, the anchor base station needs to store the context of the terminal device, and the storage of the anchor base station brings overheads. In addition, the RRC inactive state may also be referred to as an inactive state for short. In embodiments of this application, the "inactive state" and the "RRC inactive state" are a same concept, and the two concepts are interchangeable with each other.

In embodiments of this application, the following five concepts have a same meaning and are interchangeable with each other: the inactive state, a deactivating state, a not active state, a deactivated state, or a deactivation state. For example, the RRC inactive state may also be described as an RRC not active state, which is referred to as a not active state for short.

In embodiments of this application, both the RRC idle state and the RRC inactive state may be referred to as an RRC non-connected state or a non-connected state.

### 2. Two types of circuits included in a terminal device

The terminal device includes a main circuit and a wake up circuit, as shown in FIG. 2.

### 2-1. Main circuit of the terminal device

When the terminal device is in an idle/inactive state, the terminal device determines a paging frame (paging frame, PF) and a position of a paging occasion (paging occasion, PO) in the PF based on an identifier (identifier, ID) (for example, a UE ID) of the terminal device, and then receives paging in the PO. Regardless of whether the terminal device receives paging in the idle/inactive state or receives data in a connected state, the terminal device may complete these functions by using the main circuit in the terminal device.

The main circuit may also have other descriptions, for example, a main receiver. In embodiments of this application, the main circuit is used as an example for description, and should not be understood as a limitation on embodiments of this application.

In embodiments of this application, meanings indicated by the following descriptions are the same, and interchangeable with each other.

The terminal device operates using the main circuit, the terminal device operates on the main circuit, the terminal device receives or sends a signal using the main circuit, or the main circuit of the terminal device is in an operating/enabled state.

In embodiments of this application, the main circuit may be replaced with a main link. The main link indicates a connection relationship between the terminal device and a network device, and is a logical concept rather than a physical entity. A 5G NR system is used as an example. The main link may also be described as an NR main link.

Correspondingly, meanings indicated by the following descriptions are the same, and interchangeable with each other.

The terminal device operates over the (NR) main link, the terminal device operates over the (NR) main link, the terminal device receives or sends a signal over the (NR) main link, or the (NR) main link of the terminal device is in an operating/enabled state.

In embodiments of this application, an operating status of the terminal device is described by using the main link as an example, and should not be understood as a limitation on embodiments of this application.

### 2-2. Wake up circuit of the terminal device

To further reduce power consumption of the terminal device, the terminal device may further receive a signal using a separate low power small circuit. The low power small circuit may be implemented using a separate small circuit with a simple structure or a chip, and has low power consumption. The low power small circuit may be referred to as a wake up circuit.

The wake up circuit may also have other descriptions, such as a wake up radio (wake up radio, WUR) circuit, a low power circuit, a low power wake up radio (low power wake up radio, LP-WUR) circuit, and a wake up receiver (wake up receiver, WUR) module. In embodiments of this application, the wake up circuit is used as an example for description, and should not be understood as a limitation on embodiments of this application.

In embodiments of this application, meanings indicated by the following descriptions are the same, and interchangeable with each other.

The terminal device operates using the wake up circuit, the terminal device operates on the wake up circuit, the terminal device monitors or receives a low power wake up signal (low power wake up signal, LP-WUS) using the wake up circuit, or the wake up circuit of the terminal device is in an operating state.

In embodiments of this application, the wake up circuit may be replaced with a WUR link. The WUR link indicates a connection relationship between the terminal device and the network device, and is a logical concept rather than a physical entity.

Correspondingly, meanings indicated by the following descriptions are the same, and interchangeable with each other.

The terminal device operates over the WUR link, the terminal device operates on the WUR link, the terminal device monitors or receives an LP-WUS over the WUR link, or the WUR link of the terminal device is in an operating state.

In embodiments of this application, meanings indicated by the following descriptions are the same, and interchangeable with each other: monitoring or detecting. In embodiments of this application, monitoring is used as an example for description.

In embodiments of this application, the operating status of the terminal device is described by using the WUR link as an example, and should not be understood as a limitation on embodiments of this application.

For example, FIG. 2 is a diagram illustrating a terminal device receiving an LP-WUS using a wake up circuit.

As shown in FIG. 2, for the terminal device in an idle/inactive state, the terminal device performs detection on an LP-WUS using the wake up circuit. If detecting no LP-WUS using the wake up circuit, the terminal device controls a main circuit to be in an off state (or referred to as a sleep state); or if detecting the LP-WUS using the wake up circuit, the terminal device triggers wakeup of the main circuit, in other words, controls a main circuit to be in an on state or an operating state. After the main circuit is woken up, the terminal device may perform a paging receiving process.

It should be understood that FIG. 2 is mainly described by using an example in which the LP-WUS indicates some information related to paging, and should not be understood as a limitation on embodiments of this application. It is clear that the LP-WUS may alternatively indicate all information related to paging. In this case, after the main circuit is woken up, random access and the like may be performed.

### 3. Modulation scheme of an LP-WUS

To reduce power consumption of a wake up circuit, the LP-WUS is usually modulated by using on-off keying (on-off keying, OOK). Correspondingly, the wake up circuit may receive the LP-WUS by using an envelope detection method.

When the LP-WUS is modulated by using the OOK, each bit (namely, an encoded bit) may correspond to one symbol (symbol). When the bit is 1, a signal is sent in a length of the symbol (in other words, a signal power is not 0 in the length of the symbol). For convenience, the symbol may be referred to as an ON signal. When the bit is 0, no signal is sent in the length of the symbol (in other words, the signal power is 0 in the length of the symbol). For convenience, the symbol may be referred to as an OFF signal. A waveform shown in FIG. 3 represents four bits 1010. Alternatively, on the contrary, when the bit is 0, a signal is sent in the length of the symbol (in other words, the signal power is not 0 in the length of the symbol). When the bit is 1, no signal is sent in the length of the symbol (in other words, the signal power is 0 in the length of the symbol).

In addition, the symbol may also have another name, for example, may be referred to as a chip (chip). This is not limited in embodiments of this application.

When a receiver (for example, the wake up circuit in FIG. 2) demodulates an OOK signal (namely, a signal obtained by performing OOK modulation on the LP-WUS), a threshold may be set. In a length of a symbol, if a received signal power (or signal amplitude) is greater than the threshold, received bit information is considered as 1; or if a received signal power (or signal amplitude) is less than the threshold, received bit information is considered as 0.

However, in the foregoing method, it is difficult to set the threshold of the receiver (for example, the wake up circuit in FIG. 2). If an inappropriate threshold is selected, a probability of demodulation errors increases. To resolve this problem, a manner is using Manchester encoding. For example, through Manchester encoding, an original information bit "0" is encoded as "10", and an original information bit "1" is encoded as "01". When sending a signal, a transmitter uses two OOK symbols to send 1-bit original information. The original information bit "0" corresponds to an ON signal and then an OFF signal, and the original information bit "1" corresponds to an OFF signal and then an ON signal. When demodulating a Manchester-encoded OOK signal, the receiver (for example, the wake up circuit in FIG. 2) may compare relative values of signal powers (or signal amplitudes) in two adjacent symbols. If a signal power (or a signal amplitude) in a former symbol is greater than a signal power (or a signal amplitude) in a latter symbol, received bit information is considered as "0". Otherwise, the received bit information is considered as "1". In this manner, an absolute threshold may not be selected for determining.

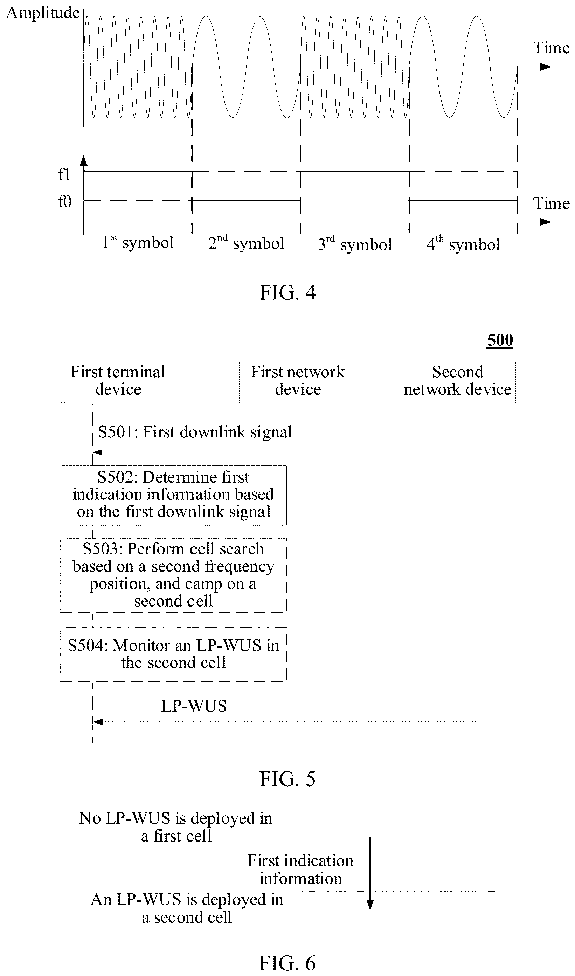

The LP-WUS may alternatively be modulated by using frequency shift keying (frequency shift keying, FSK). When the FSK is used for modulation, different frequency resources are used for different information. For example, 2FSK may carry 1-bit information. When an information bit is 0, information may be sent on a frequency resource f0, and no information is sent on a frequency resource f1; or when an information bit is 1, information may be sent on a frequency resource f1, and no information is sent on a frequency resource f0. It is assumed that f0<f1, and a waveform of an FSK signal whose information is 1010 is shown in FIG. 4. In a 1^{st} symbol and a 3^{rd} symbol, a frequency of the signal is relatively high, and in a 2^{nd} symbol and a 4^{th} symbol, a frequency of the signal is relatively low. When demodulating the signal, the receiver may compare powers on f0 and f1 to determine whether the sent information is 0 or 1.

The FSK can further support a higher modulation order to carry more information. For example, 4FSK may carry 2-bit information. When information bits are 00, information may be sent on a frequency resource f0, and no information is sent on frequency resources f1, f2, and f3; when information bits are 01, information may be sent on a frequency resource f1, and no information is sent on frequency resources f0, f2, and f3; when information bits are 10, information may be sent on a frequency resource f2, and no information is sent on frequency resources f0, f1, and f3; or when information bits are 11, information may be sent on a frequency resource f3, and no information is sent on frequency resources f0, f1, and f2. Similarly, a receive end may compare powers on a plurality of frequency resources to determine transmitted information.

In embodiments of this application, the LP-WUS may also be described as a wake up signal (wake up signal, WUS). Meanings of the wake up signal, the WUS, the low power wake up signal, and the LP-WUS are the same, and interchangeable with each other. In embodiments of this application, the LP-WUS is used as an example for description.

### 4. Deployment of an LP-WUS

The deployment of the LP-WUS may be understood as that when an operator has a plurality of frequency bands (for example, 5G frequency bands), the LP-WUS is configured and sent in a cell corresponding to one or more frequency bands in the foregoing frequency bands.

For example, China Mobile and China Broadcast & Television jointly build and share a 5G network. The two operators currently have three 5G frequency bands: n28 (700 MHz), n41 (2.6 GHz), and n79 (4.9 GHz). The operators can deploy the LP-WUS on all of the three 5G frequency bands or only a part of the frequency bands.

If the operators deploy the LP-WUS on all of the three frequency bands, the following problems may occur.

From a perspective of a network side, deploying the LP-WUS on all of the three frequency bands may cause high resource overheads, and consequently, the operators may not be motivated enough to deploy the LP-WUS.

From a perspective of a terminal device side, currently, a main receiver of the terminal device covers different frequency bands by using a plurality of radio frequency channels (for example, one radio frequency channel covering frequency bands below 1 GHz, one radio frequency channel covering frequency bands from 1 GHz to 3 GHz, and one radio frequency channel covering frequency bands from 3 GHz to 6 GHz). This is because a dynamic range of a single radio frequency channel is limited, and can cover only a specific frequency range. To achieve low power consumption, the wake up circuit may use a radio frequency channel different from that of the main receiver. In this case, if the LP-WUS is deployed on a plurality of frequency bands, a plurality of radio frequency channels configured to receive the LP-WUS also need to be integrated in the terminal device. This poses challenges to costs of the terminal device and a chip area of the terminal device.

If the operators deploy the LP-WUS on a part of the three frequency bands, the following problems may occur.

In a first aspect, when the terminal device is in an idle/inactive state, the LP-WUS indicates paging-related information. In this case, the following problems may occur.

Problem 1: When the terminal device is in the idle/inactive state, the LP-WUS may not be deployed in a cell on which the terminal device camps (camps) after performing cell search. Consequently, the terminal device cannot use the LP-WUS to save energy in some scenarios.

For example, the terminal device performs cell search in a sequence of" a cell 1 first and then a cell 2", and if first finding the cell 1, the terminal device camps on the cell 1. If the LP-WUS is not deployed in the cell 1, and the LP-WUS is deployed in the cell 2, the terminal device cannot use the LP-WUS to save energy.

Problem 2: If most terminal devices supporting the LP-WUS camp on a same cell, access resource congestion may be caused.

For example, in a normal case, different terminal devices may camp on different cells. When a terminal device accesses a network after being paged, different terminal devices initiate access in different cells, and quantities of terminal devices accessing the cells are average. However, when most terminal devices supporting the LP-WUS are centralized in one cell, these terminal devices initiate access in the same cell. Consequently, access resources of the cell are insufficient, a large quantity of terminal devices fail to access the cell, and a service delay increases.

In a second aspect, in a related technology, a related LP-WUS is usually used in a technical solution in which the terminal device is in a non-connected state (for example, the terminal device is in the idle/inactive state), instead of a technical solution in which the terminal device is in a connected state. In other words, when the terminal device is in the connected state, how to cause the terminal device to use the LP-WUS to save energy is an urgent problem to be resolved.

It should be understood that, in embodiments of this application, for a case in which no LP-WUS is configured in a cell, meanings of the following descriptions are the same, and interchangeable with each other: No LP-WUS is configured in the cell, the cell does not support an LP-WUS function, no LP-WUS is sent in the cell, no LP-WUS is deployed in the cell, or a network device does not send an LP-WUS in the cell.

Similarly, for a case in which an LP-WUS is configured in a cell, meanings of the following descriptions are the same, and interchangeable with each other: The LP-WUS is configured in a cell, the cell supports an LP-WUS function, the LP-WUS is sent in the cell, the LP-WUS is deployed in the cell, and a network device sends the LP-WUS in the cell.

In embodiments of this application, a cell and a carrier have a same meaning, and are interchangeable with each other.

With reference to Problem 1 of the first aspect and the second aspect, it may be learned that, when the LP-WUS is deployed in a part of cells, the terminal device may fail to use the LP-WUS to save energy.

In view of this, an embodiment of this application provides a first communication method. The method may be applied to the communication system shown in FIG. 1. The first communication method provided in this embodiment of this application is applied to a first terminal device, and the first terminal device is in an RRC non-connected state (for example, an idle/inactive state). The method includes: The first terminal device receives, in a first cell, a first downlink signal from a first network device. The first cell corresponds to a first frequency position. Then, the first terminal device determines first indication information based on the first downlink signal. The first indication information indicates a second frequency position, an LP-WUS is configured in a cell corresponding to the second frequency position, and the second frequency position is different from the first frequency position.

In other words, the first terminal device determines the first indication information based on the received first downlink signal. Because the first indication information indicates a frequency position corresponding to a cell in which an LP-WUS is configured, after performing cell search, even if no LP-WUS is configured in the first cell on which the first terminal device camps, the first terminal device may learn of the cell in which the LP-WUS is deployed, to help the first terminal device use the LP-WUS to save energy.

It should be understood that names of messages between devices, names of parameters in the messages, or the like in the following embodiments of this application are merely examples, and there may be other names during specific implementation. This is not specifically limited in embodiments of this application.

The following describes in detail the communication method provided in embodiments of this application with reference to FIG. 5 to FIG. 8. A communication method 500 provided in an embodiment of this application includes the following steps.

S501: A first network device sends, in a first cell, a first downlink signal to a first terminal device. Correspondingly, the first terminal device receives, in the first cell, the first downlink signal from the first network device.

The first terminal device is in an RRC non-connected state. It may be understood as that the first terminal device is in a state other than a connected state, for example, an idle/inactive state.

The first network device corresponds to the first cell, in other words, a downlink signal in the first cell is sent by the first network device.

The first downlink signal is described as follows:
For example, the first downlink signal may be a system information block (system information block, SIB). For example, the first terminal device in the idle/inactive state performs cell search and performs downlink synchronization. After completing downlink synchronization, the first terminal device may receive a system message from the first network device. The system message includes the SIB.

The first cell corresponds to a first frequency position. The first frequency position may be a frequency, a frequency range, or a frequency band. For example, the first frequency position may be a center frequency position of the first cell, or the first frequency position may correspond to a range of a frequency resource occupied by the first cell, or the first frequency position may be a frequency band (band) corresponding to a frequency resource occupied by the first cell.

In an example, no LP-WUS is configured in the first cell. This may be replaced with one of the following: The first cell does not support an LP-WUS function, no LP-WUS is sent in the first cell, and no LP-WUS is deployed in the first cell. In other words, the first network device does not send the LP-WUS in the first cell.

In another example, an LP-WUS is configured in the first cell. This may be replaced with one of the following: The first cell supports an LP-WUS function, the LP-WUS is sent in the first cell, and the LP-WUS is deployed in the first cell. In other words, the first network device sends the LP-WUS in the first cell.

S502: The first terminal device determines first indication information based on the first downlink signal. The first indication information indicates a second frequency position. An LP-WUS is configured in a cell corresponding to the second frequency position, and the second frequency position is different from the first frequency position.

For example, the first downlink signal is a SIB, and one or more information elements in the SIB include the first indication information.

It may be understood as that the first indication information indicates a frequency position at which an LP-WUS is configured, and the first indication information may indicate one frequency position.

For example, the cell corresponding to the second frequency position includes a second cell. It may be understood as that the second cell corresponds to the second frequency position. The second frequency position may be a frequency, a frequency range, or a frequency band. For example, the second frequency position may be a center frequency position of the second cell, or the second frequency position may correspond to a range of a frequency resource occupied by the second cell, or the second frequency position may be a frequency band corresponding to a frequency resource occupied by the second cell.

In some embodiments, the first indication information further indicates a fourth frequency position. An LP-WUS is configured in a cell corresponding to the fourth frequency position, and the fourth frequency position is different from the first frequency position and the second frequency position. It may be understood as that the first indication information indicates a frequency position at which an LP-WUS is configured, and the first indication information may indicate two or more frequency positions. This helps further reduce a possibility of congestion caused because a plurality of terminal devices access a same cell. The first indication information may be a list (list), or may be in another form. This is not limited in this embodiment of this application.

For example, the first indication information includes an absolute radio frequency channel number (absolute radio frequency channel number, ARFCN). There may be one ARFCN. This indicates one frequency position at which an LP-WUS is configured. For example, the first indication information includes an ARFCN 1. The ARFCN 1 indicates the second frequency position.

Alternatively, there may be a plurality of ARFCNs. This indicates a plurality of frequency positions at which an LP-WUS is configured. For example, the first indication information includes an ARFCN 1 and an ARFCN 2. The ARFCN 1 indicates the second frequency position, and the ARFCN 2 indicates the fourth frequency position.

In this embodiment of this application, the ARFCN may be an absolute frequency number in LTE (E-UTRAN absolute radio frequency channel number, EARFCN), or may be an absolute frequency number in NR (NR absolute radio frequency channel number, NRARFCN). This is not limited in embodiments of this application.

In some embodiments, for the first terminal device, after the first terminal device determines the first indication information, the following cases are included.

Case 1: No LP-WUS is configured in the first cell. The first terminal device camps on the first cell.

For example, after receiving the first indication information, the first terminal device performs cell search. However, the first terminal device does not find another cell suitable for camping. Therefore, the first terminal device re-camps on the first cell, or the first terminal device continues camping on the first cell.

Case 2: An LP-WUS is configured in the first cell. The first terminal device camps on the first cell. Then, the first terminal device monitors the LP-WUS in the first cell.

For example, the first terminal device receives LP-WUS configuration information, enables a wake up circuit based on the LP-WUS configuration information, and monitors the LP-WUS from the first network device in the first cell using the wake up circuit.

In this way, because the LP-WUS is configured in the first cell, and the first terminal device camps on the first cell, the first terminal device can use the LP-WUS to save energy.

Case 3: An LP-WUS is configured in the second cell. The first terminal device performs cell search, and camps on the second cell. For details, refer to descriptions in S503.

S503: The first terminal device performs cell search based on the second frequency position, and camps on the second cell.

The cell corresponding to the second frequency position includes the second cell.

FIG. 6 is used as an example. After the first terminal device receives the first downlink signal in the first cell, and determines the first indication information based on the first downlink signal, a cell on which the first terminal device camps changes, to be specific, the cell on which the first terminal device camps changes from the first cell to the second cell, as shown by an arrow in FIG. 6.

It should be understood that, in this embodiment of this application, the second cell corresponds to the second frequency position. An LP-WUS is configured in the second cell. This may also be described as at least one of the following: The second cell supports an LP-WUS function, an LP-WUS is sent in the second cell, and an LP-WUS is deployed in the second cell. In other words, a second network device sends the LP-WUS in the second cell.

It should be understood that, in this embodiment of this application, the first network device is the same as or different from the second network device.

When the first network device is the same as the second network device, the following scenarios may be included.

Scenario 1: The first terminal device camps on the first cell.

Scenario 2: The first terminal device camps on the second cell, and a downlink signal of the first cell and a downlink signal of the second cell are sent by a same network device.

When the first network device is different from the second network device, the following scenario may be included.

Scenario 3: The first terminal device camps on the second cell, and a downlink signal of the first cell and a downlink signal of the second cell are sent by different network devices. In addition, a network device that sends, in the first cell, the downlink signal to the first terminal device is denoted as the first network device. A network device that sends, in the second cell, the downlink signal to the first terminal device is denoted as the second network device.

S504: The first terminal device monitors the LP-WUS in the second cell.

For example, the first terminal device receives LP-WUS configuration information, enables a wake up circuit based on the LP-WUS configuration information, and monitors the LP-WUS of the second cell using the wake up circuit. It may be understood as that the first terminal device operates on a WUR link in the second cell, and receives the LP-WUS from the second network device over the WUR link, to reduce power consumption of the first terminal device.

In this way, because the LP-WUS is configured in the second cell, and the first terminal device camps on the second cell, the first terminal device can use the LP-WUS to save energy.

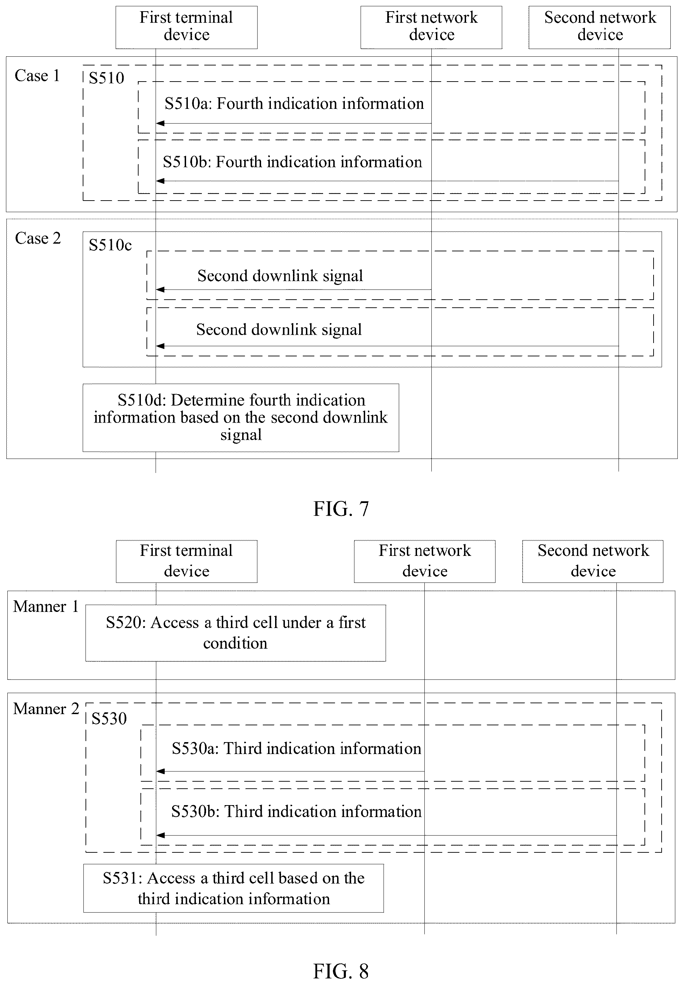

In some embodiments, as shown in FIG. 7, the first terminal device further performs S510.

S510: The first terminal device receives fourth indication information.

The fourth indication information indicates N frequency positions, the N frequency positions correspond to cells that can be accessed by the first terminal device, and N is a positive integer. In other words, each of the N frequency positions corresponds to one cell that can be accessed by the first terminal device.

This may be replaced with the following description: The fourth indication information indicates N frequency positions, the N frequency positions are frequency positions that can be accessed by the first terminal device, and N is a positive integer. In other words, each of the N frequency positions is a frequency position that can be accessed by the first terminal device.

For example, the fourth indication information includes N ARFCNs. The N ARFCNs are in one-to-one correspondence with the N frequency positions. For example, the fourth indication information includes an ARFCN 1 and an ARFCN 2. The ARFCN 1 indicates a frequency position corresponding to a cell 1, and the ARFCN 2 indicates a frequency position corresponding to a cell 2. The first terminal device is allowed to initiate access in the cell 1 or the cell 2.

It should be understood that the N frequency positions may include a frequency position corresponding to the first cell (namely, the first frequency position), or may include a frequency position corresponding to the second cell (namely, the second frequency position), or may include a frequency position corresponding to another cell (a cell other than the first cell and the second cell). This is not limited in this embodiment of this application.

For example, the fourth indication information is carried in a SIB message.

For example, as shown in a block in which "Case 1" in FIG. 7 is located, S510 includes S510a or S510b.

S510a: The first network device sends, in the first cell, the fourth indication information to the first terminal device. Correspondingly, the first terminal device receives, in the first cell, the fourth indication information from the first network device.

It may be understood that, if the LP-WUS is configured in the first cell, and the first terminal device camps on the first cell, the first terminal device may perform S510a.

In other words, because the first cell is a cell in which the LP-WUS is configured, a large quantity of terminal devices may camp on the first cell and initiate access. The first network device sends, in the first cell, the fourth indication information to the first terminal device, to indicate the N frequency positions to the first terminal device, so that the first terminal device can determine a frequency position from the N frequency positions, to initiate access. A frequency position at which the first terminal device initiates access may be different from a frequency position at which another terminal device in a same cell initiates access, or a probability that the frequency positions are different increases. In this case, a probability of an access conflict of the first terminal device is reduced, to help the first terminal device successfully perform access and reduce an access delay.

S510b: The second network device sends, in the second cell, the fourth indication information to the first terminal device. Correspondingly, the first terminal device receives, in the second cell, the fourth indication information from the second network device.

It may be understood that if the LP-WUS is configured in the second cell, and the first terminal device camps on the second cell (refer to descriptions in S503 and S504), the first terminal device may perform S510b.

In other words, because the second cell is a cell in which the LP-WUS is configured, a large quantity of terminal devices may camp on the second cell and initiate access. The second network device sends, in the second cell, the fourth indication information to the first terminal device, to indicate the N frequency positions to the first terminal device, so that the first terminal device can determine a frequency position from the N frequency positions, to initiate access. A frequency position at which the first terminal device initiates access may be different from a frequency position at which another terminal device in a same cell initiates access, or a probability that the frequency positions are different increases. In this case, a probability of an access conflict of the first terminal device is reduced, to help the first terminal device successfully perform access and reduce an access delay.

For example, as shown in a block in which "Case 2" in FIG. 7 is located, S510 may be replaced with S510c or S510d.

S510c: The first terminal device receives a second downlink signal.

For example, the second downlink signal may be a SIB.

The first terminal device in the idle/inactive state performs cell search and performs downlink synchronization. After completing a process of downlink synchronization, the first terminal device receives a system message. The system message includes the SIB.

It should be understood that the second downlink signal may be a downlink signal of the first cell. For example, if the LP-WUS is configured in the first cell, and the first terminal device camps on the first cell, the first network device sends, in the first cell, the second downlink signal to the first terminal device. Correspondingly, the first terminal device receives, in the first cell, the second downlink signal from the first network device.

Alternatively, the second downlink signal may be a downlink signal of the second cell. For example, if the LP-WUS is configured in the second cell, and the first terminal device camps on the second cell, the second network device sends, in the second cell, the second downlink signal to the first terminal device. Correspondingly, the first terminal device receives, in the second cell, the second downlink signal from the second network device.

S510d: The first terminal device determines fourth indication information based on the second downlink signal.

For example, the second downlink signal is a SIB, and an information element in the SIB includes the fourth indication information.

In other words, the first terminal device obtains the fourth indication information based on the second downlink signal.

In some embodiments, as shown in a block in which "Manner 1" in FIG. 8 is located, the first terminal device further performs S520.

S520: The first terminal device accesses a third cell under a first condition.

The third cell corresponds to a third frequency position. The first condition includes at least one of the following:

Condition 1: The first terminal device corresponds to the third frequency position.

Condition 2: The first terminal device receives second indication information. The second indication information indicates that a frequency position at which the first terminal device initiates access is the third frequency position.

For example, Condition 1 is described as follows:
Example 1: That the first terminal device corresponds to the third frequency position is determined based on the following two items: an identifier of the first terminal device and a sequence of the third frequency position in the N frequency positions.

For example, the identifier of the first terminal device corresponds to the sequence of the third frequency position in the N frequency positions. For the N frequency positions, refer to descriptions in S510. Details are not described herein again.

For example, the identifier of the first terminal device is denoted as a UE ID. The first terminal device performs calculation by using the UE ID, and determines the third frequency position based on a calculation result.

For example, when UE ID%N=0, it indicates that the third frequency position is a 1^{st} frequency position in the N frequency positions. When UE ID%N=1, it indicates that the third frequency position is a 2^{nd} frequency position in the N frequency positions. When UE ID%N=2, it indicates that the third frequency position is a 3^{rd} frequency position in the N frequency positions. Others may be deduced by analogy, and details are not described.

For another example, when UE ID%N=0, it indicates that the third frequency position is a 0^{th} frequency position in the N frequency positions. When UE ID%N=1, it indicates that the third frequency position is a 1^{st} frequency position in the N frequency positions. When UE ID%N=2, it indicates that the third frequency position is a 2^{nd} frequency position in the N frequency positions. Others may be deduced by analogy, and details are not described.

In this way, in Example 1, the first terminal device can determine a frequency position from the N frequency positions as the third frequency position based on the identifier of the first terminal device.

Example 2: That the first terminal device corresponds to the third frequency position is determined based on the following three items: an identifier of the first terminal device, a sequence of the third frequency position in the N frequency positions, and a first variable X.

For the N frequency positions, refer to descriptions in S510. Details are not described herein again.

The first variable X may be a variable related to time information. For example, the first variable X is related to time at which the first terminal device receives the LP-WUS, for example, an index value of a frame, a slot, or a symbol in which the LP-WUS is located.

For example, the identifier of the first terminal device is denoted as a UE ID. The first terminal device performs calculation by using the UE ID and the first variable X, and determines the third frequency position based on a calculation result.

For example, when (UE ID+X)%N=0, it indicates that the third frequency position is a 1^{st} frequency position in the N frequency positions. When (UE ID+X)%N=1, it indicates that the third frequency position is a 2^{nd} frequency position in the N frequency positions. When (UE ID+X)%N=2, it indicates that the third frequency position is a 3^{rd} frequency position in the N frequency positions. Others may be deduced by analogy, and details are not described.

For another example, when (UE ID+X)%N=0, it indicates that the third frequency position is a 0^{th} frequency position in the N frequency positions. When (UE ID+X)%N=1, it indicates that the third frequency position is a 1^{st} frequency position in the N frequency positions. For another example, when (UE ID+X)%N=2, it indicates that the third frequency position is a 2^{nd} frequency position in the N frequency positions. Others may be deduced by analogy, and details are not described.

In this way, the first terminal device may use different first variables at different moments, and correspondingly, the determined third frequency position also changes. For example, at a first moment, the third frequency position is the same as a frequency position of a cell on which the first terminal device currently camps. The first terminal device may initiate access without performing cell re-selection. This further reduces an access delay.

For another example, at a second moment, the third frequency position is different from a frequency position of a cell on which the first terminal device currently camps. The first terminal device first performs cell re-selection and then initiates access. In this way, access resource congestion caused because a large quantity of terminal devices initiates access to a same cell is avoided to some extent.

For example, Condition 2 is described as follows:
In Condition 2, the second indication information is sent by a network device corresponding to a cell on which the first terminal device currently camps.

For example, when the LP-WUS is configured in the first cell, and the cell on which the first terminal device currently camps is the first cell, the second indication information is sent by the first network device. Correspondingly, Condition 2 may be described as follows: The first terminal device receives the second indication information from the first network device. The second indication information may be carried in the LP-WUS sent by the first network device in the first cell.

For another example, when the LP-WUS is configured in the second cell, and the cell on which the first terminal device currently camps is the second cell, the second indication information is sent by the second network device. Correspondingly, Condition 2 may be described as follows: The first terminal device receives the second indication information from the second network device. The second indication information may be carried in the LP-WUS sent by the second network device in the second cell.

It should be understood that S520 includes the following two examples:
Example 1: The first terminal device accesses the third cell when the condition 1 is met.
Example 2: The first terminal device accesses the third cell when the condition 2 is met.

It should be noted that, in this embodiment of this application, the first terminal device may perform both S520 and S510. The first terminal device may access a cell by performing S520. The first terminal device may receive the fourth indication information by performing S510. Example 1 in S520 may be combined with S510a or S510b (that is, Case 1 in FIG. 7), or may be combined with S510c and S510d (that is, Case 2 in FIG. 7). Similarly, Example 2 in S520 may be combined with S510a or S510b (that is, Case 1 in FIG. 7), or may be combined with S510c and S510d (that is, Case 2 in FIG. 7).

It should be understood that the third cell is the same as or different from the cell on which the first terminal device currently camps. An LP-WUS may be configured in the third cell (namely, a cell corresponding to the third frequency position), or no LP-WUS is configured in the third cell.

For example, when the cell on which the first terminal device currently camps is the first cell, the third cell may be the first cell (in this case, if the LP-WUS is configured in the first cell, the third cell is a cell in which the LP-WUS is configured; or if no LP-WUS is configured in the first cell, the third cell is a cell in which no LP-WUS is configured), or may be different from the first cell (in this case, the third cell may be a cell in which the LP-WUS is configured, or may be a cell in which no LP-WUS is configured).

Further, when the third cell is the first cell, the first terminal device initiates access, to access the first cell (namely, the third cell). In addition, the second network device in Condition 2 is the same as the first network device (for details, refer to descriptions of Scenario 1 in S503). When the third cell is different from the first cell, the first terminal device first performs cell re-selection (cell re-selection) to the third cell, and then initiates access, to access the third cell.

For another example, when the cell on which the first terminal device currently camps is the second cell, the third cell may be the second cell (in this case, the third cell is a cell in which the LP-WUS is configured), or may be different from the second cell (in this case, the third cell may be a cell in which the LP-WUS is configured, or may be a cell in which no LP-WUS is configured).

Further, when the third cell is the second cell, the first terminal device initiates access, to access the second cell (namely, the third cell). In addition, the second network device in Condition 2 is the same as the first network device (for details, refer to descriptions of Scenario 2 in S503), or different from the first network device (for details, refer to descriptions of Scenario 3 in S503). When the third cell is different from the second cell, the first terminal device first performs cell re-selection to the third cell, and then initiates access, to access the third cell.

In other words, the first terminal device can determine the third frequency position under the first condition, and then determine, based on the third frequency position, to access the third cell. In this way, the third cell is the cell on which the first terminal device currently camps, or the third cell is different from the cell on which the first terminal device currently camps, to help reduce congestion that may be generated when a large quantity of terminal devices camp on a same cell and initiate access in the same cell.

In some embodiments, as shown in a block in which "Manner 2" in FIG. 8 is located, the first terminal device further performs S530 and S531.

S530: The first terminal device receives third indication information.

The third indication information indicates a second condition. The second condition is a condition under which the terminal device can access a current cell.

For example, the second condition includes: A terminal device whose UE ID is an odd number can access the current cell. Alternatively, the second condition includes: A terminal device whose UE ID is an even number can access the current cell. In this way, it can be controlled that only half of terminal devices access the current cell on average.

For another example, the second condition includes: A terminal device whose UE ID can be exactly divided by 4 can access the current cell. In this way, it can be controlled that only one quarter of terminal devices access the current cell on average.

The current cell is a cell in which the third indication information is sent. For example, the current cell is the first cell or the second cell. For details, refer to descriptions in S530a and S530b. Details are not described herein.

For example, as shown in the block in which "Manner 2" in FIG. 8 is located, S530 includes S530a or S530b.

S530a: The first network device sends, in the first cell, the third indication information to the first terminal device. Correspondingly, the first terminal device receives, in the first cell, the third indication information from the first network device.

It may be understood that if the LP-WUS is configured in the first cell, and the first terminal device camps on the first cell, the first terminal device performs S530a. In this case, the current cell of the first terminal device is the first cell.

In this case, the current cell of the first terminal device is the first cell.

S530b: The second network device sends, in the second cell, the third indication information to the first terminal device. Correspondingly, the first terminal device receives, in the second cell, the third indication information from the second network device.

It may be understood that if the LP-WUS is configured in the second cell, and the first terminal device camps on the second cell, the first terminal device performs S530b. In this case, the current cell of the first terminal device is the second cell.

S531: The first terminal device accesses the third cell based on the third indication information.

When the first terminal device meets the second condition, the third cell is the same as the current cell. In other words, the first terminal device initiates access in the current cell.

On the contrary, when the first terminal device does not meet the second condition, the third cell is different from the current cell. In other words, the first terminal device first performs cell re-selection to the third cell, and then initiates access. In an example, the third cell may be a cell determined by the first terminal device by performing cell search. In another example, the first terminal device determines, as the third frequency position, one frequency position from the N frequency positions indicated by the fourth indication information, and then determines the third cell based on the third frequency position.

In other words, the first terminal device determines, based on the second condition indicated by the third indication information sent by the second network device, to access the third cell. When the first terminal device meets the second condition, the third cell is the current cell on which the first terminal device camps. When the first terminal device does not meet the second condition, the third cell is different from the current cell on which the first terminal device camps. This helps reduce congestion that may be generated when a large quantity of terminal devices camp on a same cell and initiate access in the same cell.

It should be understood that the third indication information may be replaced with the following description:

The third indication information indicates a third condition. The third condition is a condition under which the terminal device cannot access the current cell.

For example, the third condition includes: A terminal device whose UE ID is an odd number cannot access the current cell. Alternatively, the third condition includes: A terminal device whose UE ID is an even number cannot access the current cell. In this way, it can be controlled that only half of terminal devices access the current cell on average.

For another example, the third condition includes: A terminal device whose UE ID can be exactly divided by 4 cannot access the current cell. In this way, it can be controlled that only three quarters of terminal devices access the current cell on average.

Correspondingly, when the first terminal device does not meet the third condition, the third cell is the same as the current cell. In other words, the first terminal device initiates access in the current cell. On the contrary, when the first terminal device meets the third condition, the third cell is different from the current cell. In other words, the first terminal device first performs cell re-selection to the third cell, and then initiates access.

The foregoing describes the technical solution in which the first terminal device is in the non-connected state.

The following describes a technical solution in which the first terminal device is in a connected state.

An embodiment of this application provides a second communication method. The method may be applied to the communication system shown in FIG. 1. The second communication method provided in this embodiment of this application is applied to a first terminal device, and the first terminal device is in an RRC connected state. The method includes: The first terminal device determines a first frequency position, and then the first terminal device monitors, at the first frequency position, an LP-WUS from a first network device. The LP-WUS indicates to monitor, on a first carrier, a PDCCH from a second network device, the first frequency position is out of a frequency range of the first carrier, and the first network device is the same as or different from the second network device.

In other words, when being in the RRC connected state, the first terminal device monitors, at the first frequency position, the LP-WUS from the first network device. The LP-WUS indicates to monitor, on the first carrier, the PDCCH from the second network device, and the first frequency position is out of the frequency range of the first carrier. Therefore, the first terminal device may perform PDCCH monitoring on a corresponding carrier based on the LP-WUS when being in the RRC connected state, to use the LP-WUS to save energy.

"The LP-WUS indicates to monitor, on a first carrier, a PDCCH from a second network device" may be replaced with "the LP-WUS indicates whether to monitor, on the first carrier, the PDCCH from the second network device".

It should be understood that names of messages between devices, names of parameters in the messages, or the like in the following embodiments of this application are merely examples, and there may be other names during specific implementation. This is not specifically limited in embodiments of this application.

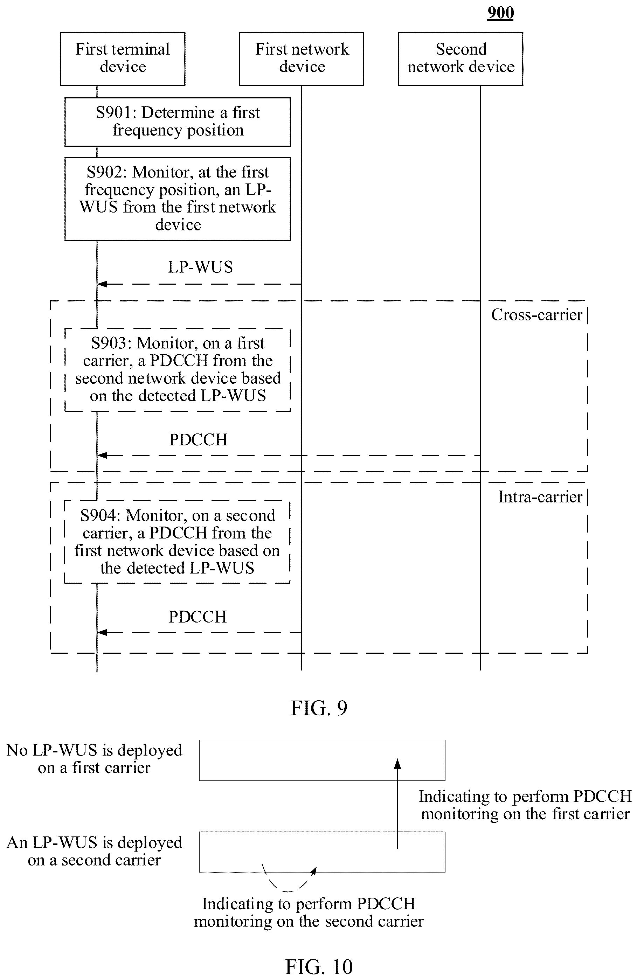

The following describes in detail the communication method provided in embodiments of this application with reference to FIG. 9 and FIG. 10. A communication method 900 provided in an embodiment of this application includes the following steps.

S901: A first terminal device determines a first frequency position.

The first terminal device is in an RRC connected state.

Receiving at the first frequency position is as follows:

In an example, the first frequency position is out of a frequency range of a carrier (for example, the following first carrier).

For example, the first carrier is denoted as a carrier #1, and the first frequency position is an out-band (out-band) monitoring position configured on the carrier #1. In this case, the first terminal device may be configured with one carrier, namely, the first carrier. Although the first frequency position is out of the carrier #1, the first frequency position may be logically used as a part of the carrier #1.

In another example, the first frequency position is in a frequency range of a carrier (for example, the following second carrier). In this case, because a first carrier and the second carrier are different carriers, the first frequency position is out of a frequency range of the first carrier.

For example, the first carrier is denoted as a carrier #1, the second carrier is denoted as a carrier #2, and the first frequency position is a monitoring position configured on the carrier #2. In this case, the first terminal device may be configured with two carriers, namely, the first carrier and the second carrier.

S902: The first terminal device monitors, at the first frequency position, an LP-WUS from a first network device.

The LP-WUS indicates to monitor, on a first carrier, a PDCCH from a second network device.

For example, the LP-WUS may include a UE ID. The UE ID represents an identifier of the first terminal device. When the first terminal device receives the LP-WUS and the UE ID included in the LP-WUS corresponds to the first terminal device, it indicates that the LP-WUS indicates the first terminal device to monitor, on the first carrier, the PDCCH from the second network device. Alternatively, on the contrary, when the first terminal device does not receive the LP-WUS including the UE ID corresponding to the first terminal device, it indicates that the LP-WUS indicates the first terminal device not to monitor, on the first carrier, the PDCCH from the second network device.

In this embodiment of this application, "the LP-WUS indicates to monitor, on a first carrier, a PDCCH from a second network device" may be replaced with "the LP-WUS indicates whether to monitor, on the first carrier, the PDCCH from the second network device".

For example, the LP-WUS may include a UE ID and a first bit. The UE ID represents an identifier of the first terminal device. When the first bit is 1, it indicates that the LP-WUS indicates the first terminal device to monitor, on the first carrier, the PDCCH from the second network device. When the first bit is 0, it indicates that the LP-WUS indicates the first terminal device not to monitor, on the first carrier, the PDCCH from the second network device.

It should be understood that, in this embodiment of this application, the first network device is the same as or different from the second network device.

For example, that the second network device is the same as the first network device may be understood as that the LP-WUS and the PDCCH on the first carrier are sent by a same network device.

For another example, that the second network device is different from the first network device may be understood as that the LP-WUS and the PDCCH on the first carrier are sent by different network devices.

When the first network device is different from the second network device, before the first network device performs S902, the first network device first determines a time point at which the second network device sends the PDCCH (to the first terminal device). For example, the second network device sends information to the first network device, so that the first network device learns of the time point at which the second network device sends the PDCCH (to the first terminal device). In this way, the first network device determines to send, at the first frequency position, the LP-WUS to the first terminal device. Correspondingly, the first terminal device detects, at the first frequency position, the LP-WUS from the first network device.

The first frequency position is out of a frequency range of the first carrier.

In an example, the first carrier is denoted as a carrier #1, and the first frequency position is an out-band (out-band) monitoring position configured on the carrier #1. For details, refer to descriptions in S901. Details are not described again.

In another example, the first frequency position is in a frequency range of a second carrier, and the second carrier is different from the first carrier. Correspondingly, S902 may be replaced with the following description: The first terminal device monitors, on the second carrier, the LP-WUS from the first network device. The LP-WUS indicates to monitor, on the first carrier, the PDCCH from the second network device. It may be understood as that the LP-WUS may implement cross-carrier indication. To be specific, a carrier (namely, the second carrier) for transmitting the LP-WUS and a carrier (namely, the first carrier) on which the PDCCH is to be monitored are different carriers, so that the LP-WUS may not be configured on each carrier, to reduce resource overheads of the LP-WUS.

In some embodiments, as shown in FIG. 9 and FIG. 10, after performing S902, the first terminal device further performs S903.

S903: The first terminal device monitors, on the first carrier, the PDCCH from the second network device based on the detected LP-WUS.

For example, when detecting the LP-WUS, the first terminal device enables a main circuit, to operate on a main link, and monitors, on the first carrier, the PDCCH from the second network device over the main link.

For another example, when the first terminal device detects the LP-WUS, and indication information carried in the LP-WUS indicates to monitor, on the first carrier, the PDCCH from the second network device, the first terminal device enables a main circuit, to operate on a main link, and monitors, on the first carrier, the PDCCH from the second network device over the main link.

In some embodiments, the LP-WUS alternatively indicates to monitor, on the second carrier, a PDCCH from the first network device. The frequency range of the second carrier includes the first frequency position. That is, PDCCH monitoring is also configured on the second carrier. It may be understood as that carrier aggregation (carrier aggregation, CA) is configured for the first terminal device, and the first terminal device performs PDCCH monitoring on the first carrier and the second carrier.

The following describes the LP-WUS by using two examples (the following Example 1 and Example 2).

Example 1: The LP-WUS includes an identifier of the first terminal device, and does not include carrier indication information. The carrier indication information includes fifth indication information and sixth indication information. In this case, the LP-WUS indicates the first terminal device to perform PDCCH monitoring on the first carrier and the second carrier.

Example 2: The LP-WUS includes fifth indication information and sixth indication information. The fifth indication information indicates the first terminal device to monitor, on the first carrier, the PDCCH from the second network device. The sixth indication information indicates the first terminal device to monitor, on the second carrier, the PDCCH from the first network device. In this case, the first network device can control the first terminal device to perform PDCCH monitoring on a specific carrier. This is more flexible and efficient.

For example, the LP-WUS includes a UE ID, a first bit, and a second bit. The UE ID represents the identifier of the first terminal device.

Specifically, when the first bit is 1, it indicates that the fifth indication information indicates the first terminal device to monitor, on the first carrier, the PDCCH from the second network device. Alternatively, on the contrary, when the first bit is 0, it indicates that the fifth indication information indicates the first terminal device to monitor, on the first carrier, the PDCCH from the second network device.

Similarly, when the second bit is 1, it indicates that the sixth indication information indicates the first terminal device to monitor, on the second carrier, the PDCCH from the first network device. Alternatively, on the contrary, when the second bit is 0, it indicates that the sixth indication information indicates the first terminal device to monitor, on the second carrier, the PDCCH from the first network device.

In this embodiment of this application, "the fifth indication information indicates the first terminal device to monitor, on the first carrier, the PDCCH from the second network device" may be replaced with "the fifth indication information indicates whether the first terminal device monitors, on the first carrier, the PDCCH from the second network device".

"The sixth indication information indicates the first terminal device to monitor, on the second carrier, the PDCCH from the first network device" may be replaced with "the sixth indication information indicates whether the first terminal device monitors, on the second carrier, the PDCCH from the first network device".

For example, the LP-WUS includes a UE ID, a first bit, and a second bit. The UE ID represents the identifier of the first terminal device.

Specifically, when the first bit is 1, it indicates that the fifth indication information indicates the first terminal device to monitor, on the first carrier, the PDCCH from the second network device. On the contrary, when the first bit is 0, it indicates that the fifth indication information indicates the first terminal device not to monitor, on the first carrier, the PDCCH from the second network device.

Similarly, when the second bit is 1, it indicates that the sixth indication information indicates the first terminal device to monitor, on the second carrier, the PDCCH from the first network device. On the contrary, when the second bit is 0, it indicates that the sixth indication information indicates the first terminal device not to monitor, on the second carrier, the PDCCH from the first network device.

In some embodiments, as shown in FIG. 9 and FIG. 10, after performing S902, the first terminal device further performs S904.

S904: The first terminal device monitors, on the second carrier, the PDCCH from the first network device based on the detected LP-WUS.

For example, when detecting the LP-WUS, the first terminal device enables a main circuit, to operate on a main link, and monitors, on the second carrier, the PDCCH from the first network device over the main link.

For another example, when the first terminal device detects the LP-WUS, and indication information carried in the LP-WUS indicates to monitor, on the second carrier, the PDCCH from the first network device, the first terminal device enables a main circuit, to operate on a main link, and monitors, on the second carrier, the PDCCH from the first network device over the main link.

It should be noted that, in this embodiment of this application, the LP-WUS indicates at least the identifier of the first terminal device. The identifier of the first terminal device may be a radio network temporary identifier (radio network temporary identifier, RNTI), for example, a cell radio network temporary identifier (cell radio network temporary identifier, C-RNTI), or an RNTI configured for the LP-WUS, or an RNTI associated with the LP-WUS.

The foregoing mainly describes the solutions provided in embodiments of this application from a perspective of interaction between network elements. Correspondingly, an embodiment of this application further provides a communication apparatus. The communication apparatus may be the network element in the foregoing method embodiment, an apparatus including the foregoing network element, or a component that can be used in a network element. It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

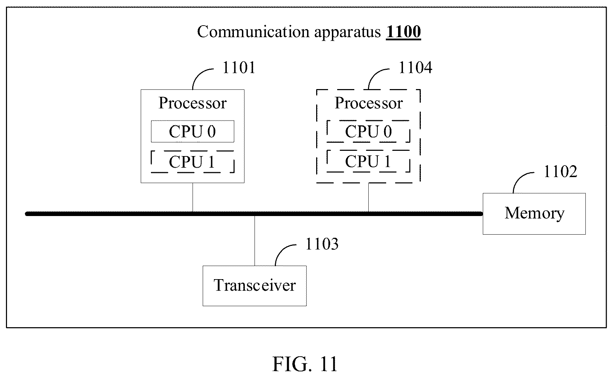

For example, FIG. 11 is a diagram of a structure of a communication apparatus according to an embodiment of this application.

For example, the communication apparatus may be a first terminal device, or may be a chip (system) or another component or part disposed in the first terminal device.

For another example, the communication apparatus may be a first network device, or may be a chip (system) or another component or part disposed in the first network device.

For another example, the communication apparatus may be a second network device, or may be a chip (system) or another component or part disposed in the second network device.

As shown in FIG. 11, the communication apparatus 1100 may include a processor 1101. Optionally, the communication apparatus 1100 may further include a memory 1102 and/or a transceiver 1103. The processor 1101 is coupled to the memory 1102 and the transceiver 1103, for example, may be connected through a communication bus.

The following describes components of the communication apparatus 1100 in detail with reference to FIG. 11.

The processor 1101 is a control center of the communication apparatus 1100, and may be one processor, or may be a general term of a plurality of processing elements. For example, the processor 1101 is one or more central processing units (central processing units, CPUs), or an application specific integrated circuit (application specific integrated circuit, ASIC), or is configured as one or more integrated circuits implementing embodiments of this application, for example, one or more digital signal processors (digital signal processors, DSPs) or one or more field programmable gate arrays (field programmable gate arrays, FPGAs).

Optionally, the processor 1101 may perform various functions of the communication apparatus 1100 by running or executing a software program stored in the memory 1102 and invoking data stored in the memory 1102.

In a specific implementation, in an embodiment, the processor 1101 may include one or more CPUs, for example, a CPU 0 and a CPU 1 shown in FIG. 11.

In a specific implementation, in an embodiment, the communication apparatus 1100 may alternatively include a plurality of processors, for example, the processor 1101 and a processor 1104 shown in FIG. 11. Each of the processors may be a single-core processor (single-CPU), or may be a multi-core processor (multi-CPU). The processor herein may be one or more devices, circuits, and/or processing cores configured to process data (for example, computer program instructions).

The memory 1102 is configured to store a software program for performing the solutions in this application, and the processor 1101 controls execution of the software program. For a specific implementation, refer to the foregoing method embodiments. Details are not described herein again.

Optionally, the memory 1102 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be used to carry or store expected program code in a form of instruction or data structure and that can be accessed by a computer. However, this is not limited thereto. The memory 1102 may be integrated with the processor 1101, or may exist independently, and is coupled to the processor 1101 through an interface circuit (not shown in FIG. 11) of the communication apparatus 1100. This is not specifically limited in embodiments of this application.

The transceiver 1103 is configured to communicate with another communication apparatus.

For example, the communication apparatus 1100 is a first terminal device, and the transceiver 1103 may be configured to communicate with a first network device or a second network device.

For another example, the communication apparatus 1100 is a first network device, and the transceiver 1103 may be configured to communicate with a first terminal device or a second network device.

For another example, the communication apparatus 1100 is a second network device, and the transceiver 1103 may be configured to communicate with a first terminal device or a first network device.

Optionally, the transceiver 1103 may include a receiver machine and a transmitter machine (not separately shown in FIG. 11). The receiver machine is configured to implement a receiving function, and the transmitter machine is configured to implement a sending function.

Optionally, the transceiver 1103 may be integrated with the processor 1101, or may exist independently, and is coupled to the processor 1101 through an interface circuit (not shown in FIG. 11) of the communication apparatus 1100. This is not specifically limited in embodiments of this application.

It is easy to understand that the structure of the communication apparatus 1100 shown in FIG. 11 does not constitute a limitation on the communication apparatus. An actual communication apparatus may include more or fewer components than those shown in the figure, or combine some components, or have different component arrangement.

In addition, for technical effects of the communication apparatus 1100, refer to the technical effects of the method in the foregoing method embodiments. Details are not described herein again.

It should be understood that, the processor in embodiments of this application may be a central processing unit (central processing unit, CPU), or the processor may be another general-purpose processor, a digital signal processor (digital signal processor, DSP), an application specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memory, RAM) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

Optionally, an embodiment of this application further provides a computer program product carrying computer instructions. When the computer instructions are run on a computer, the computer is caused to perform the method described in the foregoing embodiment.

Optionally, an embodiment of this application further provides a computer-readable storage medium. The computer-readable storage medium stores computer instructions. When the computer instructions are run on a computer, the computer is caused to perform the method described in the foregoing embodiment.

Optionally, an embodiment of this application further provides a chip, including a processing circuit and a transceiver circuit. The processing circuit and the transceiver circuit are configured to implement the method described in the foregoing embodiment. The processing circuit is configured to perform a processing action in a corresponding method, and the transceiver circuit is configured to perform a receiving/sending action in a corresponding method.

All or some of the foregoing embodiments may be implemented using software, hardware (for example, circuit), firmware, or any combination thereof. When software is used to implement embodiments, the foregoing embodiments may be implemented completely or partially in a form of a computer program product. The computer program product includes one or more computer instructions or computer programs. When the computer instructions or the computer programs are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), or a semiconductor medium. The semiconductor medium may be a solid-state drive.

It should be understood that the term "and/or" in this specification describes only an association relationship between associated objects and indicates that three relationships may exist. For example, A and/or B may indicate the following three cases: Only A exists, both A and B exist, and only B exists, where A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof refers to any combination of these items, including any combination of singular items (pieces) or plural items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual needs to achieve the objectives of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for indicating a computing device (which may be a personal computer, a server, or a communication device) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a first terminal device or a chip of the first terminal device, wherein the first terminal device is in a radio resource control RRC non-connected state, and the method comprises:
receiving, in a first cell, a first downlink signal from a first network device, wherein the first cell corresponds to a first frequency position; and
determining first indication information based on the first downlink signal, wherein the first indication information indicates a second frequency position, a low power wake up signal LP-WUS is configured in a cell corresponding to the second frequency position, and the second frequency position is different from the first frequency position.

2. The method according to claim 1, wherein the method further comprises:
performing cell search based on the second frequency position, and camping on a second cell, wherein the cell corresponding to the second frequency position comprises the second cell; and
monitoring the LP-WUS in the second cell.

3. The method according to claim 1 or 2, wherein the LP-WUS is not configured in the first cell.

4. The method according to any one of claims 1 to 3, wherein the method further comprises:
accessing a third cell under a first condition, wherein
the third cell corresponds to a third frequency position, and the first condition comprises at least one of the following:
the first terminal device corresponds to the third frequency position; or
the first terminal device receives second indication information from a second network device, wherein the second indication information indicates that a frequency position at which the first terminal device initiates access is the third frequency position.

5. The method according to claim 4, wherein
that the first terminal device corresponds to the third frequency position is determined based on the following two items:
an identifier of the first terminal device and a sequence of the third frequency position in N frequency positions; or
that the first terminal device corresponds to the third frequency position is determined based on the following three items:
an identifier of the first terminal device, a sequence of the third frequency position in N frequency positions, and a first variable, wherein
the N frequency positions correspond to cells that can be accessed by the first terminal device, and N is a positive integer.

6. The method according to claim 4 or 5, wherein the second indication information is carried in an LP-WUS.

7. The method according to any one of claims 1 to 3, wherein the method further comprises:
receiving third indication information from a second network device; and
accessing a third cell based on the third indication information, wherein
the third indication information indicates a second condition, the second condition is a condition under which a terminal device can access a current cell, and the current cell is a cell in which the third indication information is sent; and
when the first terminal device meets the second condition, the third cell is the same as the current cell; or when the first terminal device does not meet the second condition, the third cell is different from the current cell.

8. The method according to any one of claims 1 to 7, wherein the method further comprises:
receiving fourth indication information from the second network device, wherein the fourth indication information indicates the N frequency positions, the N frequency positions correspond to the cells that can be accessed by the first terminal device, and N is a positive integer.

9. The method according to claim 8, wherein the fourth indication information comprises N absolute radio frequency channel numbers ARFCNs, and the N ARFCNs are in one-to-one correspondence with the N frequency positions.

10. The method according to any one of claims 1 to 9, wherein the first indication information comprises an absolute radio frequency channel number ARFCN, and the ARFCN corresponds to the second frequency position.

11. The method according to any one of claims 1 to 10, wherein the first indication information further indicates a fourth frequency position, an LP-WUS is configured in a cell corresponding to the fourth frequency position, and the fourth frequency position is different from the first frequency position and the second frequency position.

12. A communication method, applied to a first terminal device or a chip of the first terminal device, wherein the first terminal device is in a radio resource control RRC connected state, and the method comprises:
determining a first frequency position; and
monitoring, at the first frequency position, a low power wake up signal LP-WUS from a first network device, wherein
the LP-WUS indicates to monitor, on a first carrier, a physical downlink control channel PDCCH from a second network device, the first frequency position is out of a frequency range of the first carrier, and the first network device is the same as or different from the second network device.

13. The method according to claim 12, wherein the first frequency position is in a frequency range of a second carrier, and the second carrier is different from the first carrier.

14. The method according to claim 13, wherein the LP-WUS further indicates to monitor, on the second carrier, a PDCCH from the first network device.

15. The method according to claim 14, wherein
the LP-WUS comprises an identifier of the first terminal device, wherein
the LP-WUS indicates the first terminal device to perform PDCCH monitoring on the first carrier and the second carrier.

16. The method according to claim 14, wherein
the LP-WUS comprises fifth indication information and sixth indication information, wherein
the fifth indication information indicates the first terminal device to perform PDCCH monitoring on the first carrier, and the sixth indication information indicates the first terminal device to perform PDCCH monitoring on the second carrier.

17. A communication method, applied to a first network device or a chip of the first network device, wherein the method comprises:
determining first indication information, wherein the first indication information indicates a second frequency position, and a low power wake up signal LP-WUS is configured in a cell corresponding to the second frequency position; and
sending, in a first cell, a first downlink signal to a first terminal device, wherein the first cell corresponds to a first frequency position, the first frequency position is different from the second frequency position, the first terminal device is in a radio resource control RRC non-connected state, and the first downlink signal comprises the first indication information.

18. The method according to claim 17, wherein the method further comprises:
sending, in a second cell, the LP-WUS to the first terminal device, wherein the cell corresponding to the second frequency position comprises the second cell.

19. The method according to claim 17 or 18, wherein the method further comprises:
determining, under a first condition, that the first terminal device accesses a third cell, wherein
the third cell corresponds to a third frequency position, and the first condition comprises at least one of the following:
the first terminal device corresponds to the third frequency position; or
the first network device sends second indication information to the first terminal device, wherein the second indication information indicates that a frequency position at which the first terminal device initiates access is the third frequency position.

20. The method according to claim 17 or 18, wherein the method further comprises:
sending third indication information to the first terminal device, wherein the third indication information indicates a second condition, the second condition is a condition under which a terminal device can access a current cell, and the current cell is a cell in which the third indication information is sent.

21. The method according to any one of claims 17 to 20, wherein the method further comprises:
sending fourth indication information to the first terminal device, wherein the fourth indication information indicates N frequency positions, the N frequency positions correspond to cells that can be accessed by the first terminal device, and N is a positive integer.

22. A communication method, applied to a first network device or a chip of the first network device, wherein the method comprises:
determining a first frequency position; and
sending, at the first frequency position, a low power wake up signal LP-WUS to a first terminal device, wherein
the first terminal device is in a radio resource control RRC connected state, the LP-WUS indicates to monitor, on a first carrier, a physical downlink control channel PDCCH from a second network device, the first frequency position is out of a frequency range of the first carrier, and the first network device is the same as or different from the second network device.

23. A terminal device, comprising a processor and a memory, wherein the processor is coupled to the memory, the memory stores program instructions, and when the program instructions stored in the memory are executed by the processor, the terminal device is caused to perform the method according to any one of claims 1 to 11, or the terminal device is caused to perform the method according to any one of claims 12 to 16.

24. A network device, comprising a processor and a memory, wherein the processor is coupled to the memory, the memory stores program instructions, and when the program instructions stored in the memory are executed by the processor, the network device is caused to perform the method according to any one of claims 17 to 21, or the network device is caused to perform the method according to claim 22.

25. A chip, comprising a processor and a memory coupled to the processor, wherein the memory stores a computer program, the chip is located in a terminal device, and when the processor executes the computer program, the terminal device is caused to perform the method according to any one of claims 1 to 11, or the terminal device is caused to perform the method according to any one of claims 12 to 16.

26. A chip, comprising a processor and a memory coupled to the processor, wherein the memory stores a computer program, the chip is located in a network device, and when the processor executes the computer program, the network device is caused to perform the method according to any one of claims 17 to 21, or the network device is caused to perform the method according to claim 22.

27. A computer-readable storage medium, storing a computer program or instructions, wherein when the computer program or the instructions are executed on a terminal device, the terminal device is caused to perform the method according to any one of claims 1 to 11, or the terminal device is caused to perform the method according to any one of claims 12 to 16.

28. A computer-readable storage medium, storing a computer program or instructions, wherein when the computer program or the instructions are executed on a network device, the network device is caused to perform the method according to any one of claims 17 to 21, or the network device is caused to perform the method according to claim 22.
